# EUROPÄISCHE PATENTSCHRIFT

(11) **EP 1 741 687 B1**
(45) Veröffentlichungstag und Bekanntmachung des Hinweises auf die Patenterteilung: **12.10.2011**
(21) Anmeldenummer: 05014530.9
(22) Anmeldetag: 05.07.2005
(51) Int. Cl.: C04B 38/00, C04B 35/573, F01N 3/022, B01D 53/94, B01D 46/24

(54) **Poröser beta-SIC-haltiger keramischer Formkörper und Verfahren zu dessen Herstellung aus einem Kohlenstoff-haltigen Formkörper**
Porous ß-SiC containing shaped ceramic body and method of making it.
Corps formé céramique poreux contenant ß-SiC et son procédé de préparation.

(43) Veröffentlichungstag der Anmeldung: 10.01.2007
(73) Patentinhaber: MANN+HUMMEL Innenraumfilter GmbH & Co. KG, 95482 Gefrees (DE)
(72) Erfinder: Weisensel, Lars, 97729 Ramsthal (DE); Greil, Peter Prof. Dr., 91085 Weisendorf (DE); Sieber, Heino Dr., 85081 Ingolstadt (DE); Wolff, Thomas, 95213 Münchberg (DE)
(74) Vertreter: Walcher, Armin

(56) Entgegenhaltungen:
- EP-A- 1 544 184
- DE-A1- 4 409 377
- US-A- 4 481 179
- US-A- 4 564 496
- US-A- 5 429 780
- US-A- 5 474 587
- US-A1- 2003 168 757
- US-A1- 2003 180 538
- US-B1- 6 582 796
- GREIL P ET AL: "Biomorphic Cellular Silicon Carbide Ceramics from Wood: I. Processing and Microstructure" JOURNAL OF THE EUROPEAN CERAMIC SOCIETY, ELSEVIER SCIENCE PUBLISHERS, BARKING, ESSEX, GB, Bd. 18, Nr. 14, Dezember 1998 (1998-12), Seiten 1961-1973, XP004144406 ISSN: 0955-2219
- MORANCAIS A ET AL: "High porosity SiC ceramics prepared via a process involving an SHS stage" JOURNAL OF THE EUROPEAN CERAMIC SOCIETY, ELSEVIER SCIENCE PUBLISHERS, BARKING, ESSEX, GB, Bd. 23, Nr. 11, Oktober 2003 (2003-10), Seiten 1949-1956, XP004424291 ISSN: 0955-2219
- QIAN JUN-MIN ET AL: "Preparation and properties of porous microcellular SiC ceramics by reactive infiltration of Si vapor into carbonized basswood" MATER CHEM PHYS; MATERIALS CHEMISTRY AND PHYSICS DEC 20 2003, Bd. 82, Nr. 3, 20. Dezember 2003 (2003-12-20), Seiten 648-653, XP002341886
- GREIL P ET AL: "Effect of microstructure on the fracture behavior of biomorphous silicon carbide ceramics" JOURNAL OF THE EUROPEAN CERAMIC SOCIETY, ELSEVIER SCIENCE PUBLISHERS, BARKING, ESSEX, GB, Bd. 22, Nr. 14-15, 2002, Seiten 2697-2707, XP004377669 ISSN: 0955-2219

## Beschreibung

Die Erfindung betrifft einen porösen β-SiC-haltigen keramischen Formkörper und ein Verfahren zu dessen Herstellung aus einem Kohlenstoff-haltigen Formkörper.

SiC-basierende Materialien werden für eine Vielzahl von unterschiedlichen Anwendungen, insbesondere dort wo hohe Stabilität bei hohen Temperaturen oder hohe Korrosionsbeständigkeiten gefordert werden, eingesetzt. Hochporöse, und damit auch leicht gewichtige, SiC-basierende Keramiken werden im zunehmenden Maße als Katalysatorträger, Brennhilfsmittel, Isolationsmaterialien, Substratmaterialien oder zur Gaserhitzung in Porenbrennern oder für Solaranlagen sowie zur Abgasreinigung bei hohen Temperaturen als Filtermaterialien benötigt.

In den vergangenen Jahrzehnten wurden mehrfach Verfahren beschrieben, die sich mit der Silizierung von Halbzeugformteilen unterschiedlicher Zusammensetzung von Kohlenstoff, SiC und Si beziehen. Neben der Silizierung von Fasergelegen unterschiedlicher Webart und unterschiedlichen Webaufbaus wurde auch die pulvertechnologische Route beschrieben. (W.B. Hillig "Melt Infiltration Approach to Ceramic Matrix Composites" J.Am. Ceram. Soc. 71 (1988) C96-C99, E. Fitzner und R. Gadow, "Fiber-Reinforced Silicon Carbide", Am. Cer. Soc. Bull. 65 (1986) 326).

DE 197 11 831 A1 beschreibt ferner ein Verfahren, bei dem auf der Basis von SiC und Kohlenstoff eine dichte, kohlenstofffaserverstärkte Verbundkeramik zur Verwendung als Bremsscheibe hergestellt wird, die anschließend mit Si-infiltriert wird und siliziert wird.

Die oben beschriebenen Verfahren, die unterschiedliche Halbzeugmaterialien zur Si-Infiltration verwenden, verwenden eine Prozessführung, bei der die Halbzeugmaterialien aus Si-, SiC- und C-Pulvern oder aus den entsprechenden Fasern hergestellt und dann mittels einer Si-Schmelze siliziert werden. Nach der Silizierung entstehen nahezu dichte Bauteile aus SiC oder SiC/C-Keramik. Diese Verfahren sind jedoch nicht für die Herstellung von porösen SiC-basierenden Bauteilen geeignet.

Neben der Herstellung von dichten SiSiC-Keramiken wurden in den vergangenen Jahren ebenfalls unterschiedliche Verfahren zur Herstellung poröser SiC-Keramiken insbesondere über die pulvertechnologische Route auf der Basis von SiC-Pulvern beschrieben (DE 197 27 115 A1 - Poröse SiC-Keramik und Verfahren zu ihrer Herstellung auf der Basis von SiC, DE 40 25 239 C1 - Verfahren zur Herstellung von Formkörpern aus Si-infiltriertem Siliziumcarbid oder Siliziumcarbid und Kohlenstoff, DE 37 19 606 C2 - Verfahren zur Silizierung von porösen Formkörpern aus SiC und Kohlenstoff durch Einwirken von elementarem Silizium, DE 694 293 23 T2/EP 0 657 403 B1 - Poröses keramisches Material und Verfahren zu seiner Herstellung ausgehend von Siliziumcarbid und Keramikpulver).

Zur Herstellung von porösen, extrudierten Formkörpern aus SiC gibt es drei unterschiedliche Verfahrensarten.

Zum einen werden Formkörper aus den entsprechenden SiC-Pulvern mit unterschiedlichen Zusätzen extrudiert und anschließend gesintert. Das Sintern der SiC-Grünkörper erfolgt dabei bei sehr hohen Temperaturen über 2000 °C, die für eine Rekristallisation des SiC und damit zur Bildung einer stabilen, porösen SiC-Struktur notwendig sind (US 4,777,152).

Die WO 93/13303 beschreibt die Herstellung von Formkörpern aus SiC-Pulver, bei denen ebenfalls Rekristallisationstemperaturen von über 2000 °C benötigt werden. Durch die sehr hohe Härte der α-SiC-Partikel sind jedoch die Extrusionsmundstücke einem sehr hohen Verschleiß unterworfen, was das Verfahren kostenintensiv gestaltet. Ein weiterer noch höherer Kostenfaktor ist jedoch das Rekristallisieren bei über 2000 °C. Neben dem enormen Energieverbrauch machen sich auch die hohen Wartungskosten für den Ofen bemerkbar, da der Verschleiß der Graphitheizer bei Temperaturen oberhalb von 1800 °C exponentiell zunimmt.

Bei den oben genannten Verfahren wird bei über 2000°C eine Rekristallisation des SiC durchgeführt, um die gewünschte Porenverteilung und eine notwendige Festigkeit zu erreichen. Bei diesen Temperaturen wandelt sich jedoch β-SiC in α-SiC um. α-SiC besitzt im Einzelkorn eine höhere Festigkeit als β-SiC, weshalb diese Modifikation auch als Schleifmittel verwendet wird. In den porösen Filterstrukturen kommt es jedoch nicht so sehr auf die Festigkeit des Einzelkorns, sondern vielmehr auf die Festigkeit der gesamten porösen Struktur an, d.h. auf die Bindung der SiC-Partikel untereinander und auf die Porengröße und die Porosität.

Der zweite in verschiedenen Anwendungen beschriebene Weg geht über die Ausgangsstoffe Silizium und Kohlenstoff, wobei der Kohlenstoff selbst teilweise aus Vorläufern (precursor) mittels Pyrolyse gewonnen wird. Die WO 01/98207 beschreibt das Mischen von metallischem Silizium mit einem pyrolysierbaren Polymer (bspw. ein Phenolharz), das nach der Pyrolyse bei Temperaturen zwischen 1400 °C und 1800 °C in SiC umgewandelt wird. EP 0 796 830 B1 beschreibt die Extrusion einer Mischung aus metallischem Silizium mit graphitischem Kohlenstoff und anschließender Bildung von SiC, das bei Temperaturen zwischen 2000 °C und 2300 °C rekristallisiert werden muss.

Als dritten Weg beschreibt US 6,582,796 die Mischung von SiC-Pulver mit einem keramischen Binder. Das SiC wird mit oxidkeramischen Bestandteilen vermischt und extrudiert und anschließend bei Temperaturen von 1600 °C unter oxidierender Atmosphäre gebrannt. Auch hier befindet sich SiC in der Ausgangsmasse, die extrudiert wird, was zu einem sehr hohen Abrieb und Verschleiß am Extrusionswerkzeug führt.

P. Greil et al., Journal of the European Ceramic Society 18 (1998) 1981-1973 betrifft biomorphe zelluläre Siliziumcarbidkeramiken aus Holz.

US 6,582,796 B1 betrifft eine monolithische Honigwabenstruktur aus poröser Keramik und deren Verwendung als Partikelfilter.

US 4,564,496 betrifft ein Verfahren zum Herstellen von porösen Siliziumcarbidkörpem.

EP 1 544 184 A1 betrifft ein auf Siliziumcarbid basierendes wärmebeständiges poröses Material.

US 200210011683 A1 betrifft einen Siliziumcarbid-Honigwabenformkörper und ein Verfahren zur Herstellung desselben.

EP 1 338 322 A1 betrifft einen Katalysator tragenden Filter zur Reinigung von Abgas, wobei eine Katalysatorschicht auf Partikeln eines keramischen Trägermaterials aufgebracht ist.

Aufgabe der Erfindung ist es, ein verbessertes Verfahren zur Herstellung von porösen Keramiken auf SiC-Basis bereitzustellen, bei dem der Energieaufwand geringer ist und der Verschleiß und Abrieb an den Formwerkzeugen verringert wird.

Eine weitere Aufgabe ist es, einen porösen keramischen Formkörper auf SiC-Basis mit definierbarer Porenstruktur und ausreichender Porosität und Feinzelligkeit bereitzustellen, der geeignet ist, besonders effektiv Feinstaub zurückzuhalten, und eine hervorragende Temperaturbeständigkeit, chemisch und mechanische Beständigkeit aufweist.

Die der Erfindung zugrundellegende Aufgabe wird durch Bereitstellen eines Verfahrens zur Herstellung eines porösen β-SiC-haltigen keramischen Formkörpers gemäß Anspruch 1 gelöst.

Bevorzugte Weiterbildungen des Verfahren zur Herstellung von hochporösen keramischen Formkörpern sind in den Unteransprüchen 2 bis 12 angegeben.

Vorzugsweise wird der poröse Kohlenstoff-haltige Formkörper geformt und anschließend getrocknet und/oder pyrolysiert.

Des weiteren wird die der Erfindung zugrundeliegende Aufgabe durch einen porösen β-SiC-haltigen keramischen Formkörper gemäß Anspruch 13 gelöst.

Vorzugsweise ist der poröse β-SiC haltige keramische Formkörper ein Si-infiltrierter Kohlenstoff-haltiger Formkörper. Vorzugsweise umfasst der Kohlenstoff-haltige Formkörper, aus dem der poröse β-SiC-haltige Formkörper gebildet ist, Kohlenstoff-haltige Partikel in einem Partikelgrößenbereich von 1 bis 100 µm, besonders bevorzugt in einem Partikolgrößenbereich von 8 bis 50 µm. Bei einer Ausführungsform umfasst der Kohlenstoff-haltige Formkörper Kohlenstoffpartikel in einem Partikelgrößenbereich von 8 bis 15 µm oder In einem Partikeigrößenbereich von 15 bis 35 µm. Aus dem Kohlenstoff-haftigen Formkörper entsteht vorzugsweise durch Infiltration mit Silizium der β-SiC-haltige Formkörper. Der Kohlenstoff-haltige Formkörper enthält vor der Silizierung vorzugsweise kein SIC.

Bevorzugte Weiterbildungen des hochporösen keramischen Formkörpers sind in den Unteransprüchen 14 bis 21 angegeben.

Die Porosität des β-SiC-haltigen keramischen Formkörpers kann äußerst vorteilhaft über die Partikelgröße der zur Herstellung des Kohlenstoff-haltigen Formkörpers verwendeten Kohtenstoffmaterialien eingestellt werden. Beispielsweise bei Verwendung einer grobkörnigen Kohle wird eine größere Porenstruktur in dem Kohlenstoff-haltigen Formkörper als bei Verwendung einer feinkörnigen Kohle eingestellt. Über die Partikelgröße oder Korngröße der verwendeten Kohlenstoffmaterialien, welche vorzugsweise In dem Bereich von 1 bis 100 µm, besonders bevorzugt im Bereich von 8 bis 50 µm liegt, kann mithin die Porengröße im Kohlenstoff-haltigen Formkörper eingestellt bzw. definiert werden.

Bei einer Ausführungsform umfasst der Kohlenstoff-haltige Formkörper Kohlenstoffpartikel in einem Partikelgrößenbereich von 8 bis 15 µm oder in einem Partikelgrößenbereich von 15 bis 35 µm. Vorzugsweise sind die Kohlenstoffhaltigen Partikel im Kohlenstoff-haltigen Formkörper über ein pyrolysiertes Harz gebunden.

Vorzugsweise liegen die Kohlenstoff-haltigen Partikel zu 80 Gew.-%, vorzugsweise zu Gew.-90%, besonders bevorzugt zu Gew.-100%, bezogen auf das Gesamtgewicht des porösen Formkörpers, nicht als Agglomerate und/oder nicht als Granulate vor, wobei sich diese Werte auf das Gesamtgewicht der Kohlenstoff-haltlgen Partikel beziehen.

Da die von dem Kohlenstoff-haltigen Formkörper vorgegebene Matrix oder Struktur siliziert wird, das heißt mit Silizium oder Silizium-haltigen Substanzen umgesetzt wird, wird die vorgegebene Matrix oder Struktur auf den β-SiC-haltigen Formkörper "übertragen". Somit kann auf überraschend einfache Art und Welse ein β-SiC-haltigsr Formkörper mit vorgegebener oder definierter Porosität hergestellt werden.

Vorzugsweise weist der Kohlenstoff in dem Kohlenstoffhaltigen Formkörper und das Silizium und/oder das Silizium in den Silizum-haltigen Substanzen ein Massenverhältnis von 2,33: bis 5:1 von Silizium zu Kohlenstoff auf. Bei Siliziumhaltigen Verbindungen bezieht sich diese Angabe nur auf den Massenanteil Silizium, der in der Silizium-haltigen Verbindung enthalten ist.

Die Porosität des Kohlenstoff-hattigen Formkörpers liegt dabei üblicherweise in einem Bereich von 2% bis 95%. Die Porosität des Kohlenstoff-haltigen Formkörpers beträgt vorzugsweise mindestens 5%, bevorzugt mehr als 10 %. Vorzugsweise liegt die Porosität des Kohlenstoff-haltigen Formkörpers in einem Bereich von 10% bis 50%.

Die Porosität des erfindungsgemäßen β-SiC-haltigen Formkörpers beträgt 2% bis 80%. Für poröse Partikelfiltermedien werden bevorzugt Porositäten in einem Bereich von 20% bis 70%, besonders bevorzugt von 30 bis 65 % eingestellt. % Porosität bedeutet offenes Volumen bezogen auf das Volumen der festen Struktur. Unter Porosität versteht man die Summe der Hohlräume In einem festen, porösen Körper, bezogen auf dessen äußeres Volumen. Die Summe der Hohlräume wird dabei In % bezogen auf das äußere Volumen angegeben, welches 100% entspricht

Die innere Oberfläche des Kohlenstoff-haltigen Formkörpers beträgt mindestens 50 m²/g, bevorzugt mindestens 150 m²/g und besonders bevorzugt 400 m²/g. Das Verfahren zur Bestimmung des BET-Warts wird gemäß dem von Brunauer, Emmet und Teller im Journal of American Chemical Society, Band 60, 1938, Seite . 309 beschriebenen Verfahren durchgeführt.

Bei einer vorteilhaften Ausführungsform des erfindungsgemäßen Verfahrens wird zunächst eine Mischung von pulverförmigen Kohlenstoffen, organischen Bindemitteln und einer Flüssigphase hergestellt, die nachfolgend unter Erhalt eines Kohlenstoff-haltigen Formkörpers extrudiert wird.

Erfindungsgemäß wird der Kohlenstoff-haltige Formkörper in eine Kanäle-haltige Struktur extrudiert, die aus einer Vielzahl von Kanälen besteht. Vorzugsweise weist die Kanäle-haltige Struktur sich entlang der Längsachse des Formkörpers erstreckende Kanäle auf, die im wesentlichen parallel zueinander angeordnet sind. Der Querschnitt der Kanäle wird im allgemeinen auch als Zelle bezeichnet. Vorzugsweise weisen die Kanäle einen quadratischen oder polygonalen Querschnitt, beispielsweise hexagonalen oder octogonalen Querschnitt, auf. Besonders bevorzugt ist ein hexagonaler Querschnitt, da dieser beim Durchströmen mit gasförmigen und/oder flüssigen Stoffen einen geringeren Reibungswiderstand erzeugt. Vorzugsweise weist die Kanäle-haltige Struktur eine Kanaldichte von 50 bis 400 Kanälen/ inch², weiter bevorzugt von 180 bis 300 Kanälen /inch², besonders bevorzugt von 200 bis 300 Kanälen /inch² auf. Unter "Kanaldichte" gemäß der Erfindung wird die Zahl der Kanäle pro inch² senkrecht zur Längsachse der Kanäle in dem porösen Formkörper verstanden.

Da die Abscheidung von Rußpartikeln auf dem porösen β-SIC-haltige Formkörper, welcher insbesondere als Rußfilter für einen PKW ausgebildet ist, auf der Oberfläche erfolgt, sind besonders feinzellige Kanäle-haltige Strukturen sehr gut geeignet. Hierdurch wird bei großer Filteroberfläche ein geringer Druckabfall erreicht Dies ist wichtig, da durch einen solchen Dieselrußfilter 10.000 l/min Gas durchgeführt werden müssen

Die Kanalwandstärken sollten dabei bei dem porösem β-SiC -Formkörpers so dünn wie möglich sein. Es musste ein Optimum zwischen mechanischer Festigkeit des gesamten Filters und der Kanalwandstärke gefunden werden. Weiterhin kommt bei der Kanalwandstärke noch hinzu, dass je nach eingesetztem Material sich nicht beliebig dünne Wände extrudieren lassen. Insbesondere der Einsatz von SiC in der Extrusionsmasse schränkt die Möglichkeiten zur Reduzierung der Wandstärken deutlich ein.

Bei einer bevorzugten Ausführungsform weisen die Kanalwände des extrudierten β-SiC-Formkörpers eine Wandstärke in dem Bereich von 100 µm bis 450 µm, bevorzugt 150 bis 400 µm, vorzugsweise 200 bis 380 µm, noch weiter bevorzugt 220 bis 350 µm, auf.

Hierdurch wird eine ausreichende Stabilität bei einer deutlich vergrößerten Oberfläche erreicht, was die Herstellung von kleineren Filtern ermöglicht. Gerade für den Abgasbereich von Diesel-PKW ist es notwendig, Filter mit kleinerem Volumen bereitzustellen. Die Herstellung dünnerer Wandstärken wird erst durch das erfindungsgemäße Herstellungsverfahren ermöglicht, da kein SiC in der Ausgangsmasse vorliegt. Die Reduzierung der Wandstärke führt bereits bei einer Reduzierung der Wandstärke um 70 µm und bei gleichzeitiger Erhöhung der Kanaldichte zu einer deutlichen Erhöhung der Oberfläche des Filters bei gleichen Volumen.

Durch die Kombination eines Filters mit großer Feinzelligkeit und geringen Wandstärken wird eine deutlich erhöhte Filteroberfläche erreicht, die die Bereitstellung von kleineren Filtern bei gleichbleibender Oberfläche ermöglicht.

Unter dem Begriff "Kohlenstoff-haltig" im Sinne der Erfindung werden vorzugsweise Stoffe verstanden, die Kohlenstoff in der Graphitmodifikation enthalten oder umfassen.

Vorzugsweise werden Kohlenstoff-haltige Partikel verwendet, deren mikrokristalline Bereiche eine poröse Struktur aufbauen, wie es beispielsweise bei Aktivkoks und Aktivkohle der Fall ist. Unter Aktivkoks im Sinne der Erfindung wird eine Kohlenstoff-haltige Substanz verstanden, die nach der Carbonisierung aus dem Rohstoff bereits eine innere Oberfläche aufweist. Die Carbonisierung, welche auch als Verkokung bezeichnet wird, von bestimmten Ausgangsstoffen wie zum Beispiel der makroporöse Polymeradsorber Ambersorb 600 von RohmHaas, führt bereits ohne weitere Aktivierung zu inneren Oberflächen von 500 bis 600 m²/g.

Kohlenstoffe, deren mikrokristalline Bereiche eine poröse Struktur aufbauen, sind besonders geeignet, um durch Infiltration mit Silizium in β-SiC umgewandelt zu werden. Die mikroporösen Strukturen beispielsweise einer Aktivkohle, sind besonders gut zugänglich für das Silizium, wenn es als Schmelze vorliegt. So bildet sich über der Schmelze eine Dampfphase des Siliziums und dieser Siliziumdampf diffundiert in die Poren und setzt sich dort zu β-SiC um. Hierdurch wird eine besonders gute Reaktivität bei der Umsetzung des Kohlenstoff-haltigen Formkörpers mit Silizium bei einer besonders hohen inneren Oberfläche des Kohlenstoffs erhalten.

Kohlenstoff ordnet sich im Graphit in der hexagonalen Struktur in übereinander liegenden Ebenen an. In rein kristallinem Graphit sind diese Ebenen parallel zueinander angeordnet und es gibt keine ungeordneten Bereiche. In teilkristallinem Kohlenstoff, wie beispielsweise Aktivkohle, gibt es große Bereiche, in denen die Graphitebenen ungeordnet zueinander vorliegen. Dies sind die amorphen Bereiche. In diesen amorphen Bereichen gibt es kleine Bereiche, in denen drei bis vier Graphitebenen parallel zueinander vorliegen. Diese Bereiche werden als mikrokristalline Bereiche bezeichnet. Unter dem Begriff "mikrokristalline Bereiche" sind also Bereiche zu verstehen, in denen drei bis vier Graphitebenen parallel zueinander vorliegen.

Vorzugsweise werden die Kohlenstoff-haitigen Partikel, (weiche nachstehend auch als pulverförmige Kohlenstoffe bezeichnet werden) aus der Gruppe, bestehend aus Aktivkohle, Koks, Kohle, Ruß, Graphit, pyrolysiertem Harz und Mischungen davon, ausgewählt. Besonders bevorzugt wird Aktivkohle verwendet. Aktivkohle besitzt aufgrund ihrer mikrokristallinen Struktur die Eigenschaft, sich besonders gut mit Silizium oder Silizium-haltigen Substanzen zu β-SiC umzusetzen. Vorzugsweise erfolgt die Umsetzung von Silizium und dem Kohlenstoff-haltigen Material, bevorzugt Aktivkohle, bei Temperaturen oberhalb des Schmelzpunktes von Silizium. Besonders bevorzugt erfolgt die Umsetzung des Siliziums mit Kohlenstoff-haltigen Partikeln, die über ein pyrolysiertes Harz gebunden sind.

Die pulverförmigen Kohlenstoffe aus der Gruppe bestehend aus Aktivkohle, Koks, Kohle, Ruß, Graphit, pyrolysiertem Harz und Mischungen davon können beispielsweise aus den Basismaterialien (Ausgangsmaterialien) Holz, Fruchtkernen, Fruchtschalen, Pech oder Teer hergestellt werden. Als pulverförmige Kohlenstoffe sind allgemein biomorhpe Kohlenstoffe, d.h. Kohlenstoffe, die durch Pyrolyse von biomorphen Material wie Holz, Fruchtkernen und Fruchtschalen erhalten werden, bevorzugt. Biomorphe Kohlenstoffe lassen sich mit Silizium besonders gut zu β-SiC umsetzen, da sie zum großen Teil mikrokristalline Bereiche aufweisen.

Vorzugsweise wird der biomorphe Kohlenstoff durch eine Säurewäsche gereinigt. Hierdurch werden mineralische Bestandteile, die beim Verkokungsprozess zurückbleiben können, weitgehend herausgewaschen. Weiterhin werden metallische Verunreinigungen, wie zum Beispiel Kalium, Natrium und Calcium, entfernt. Diese metallischen Verunreinigungen werden bei der Umsetzung mit flüssigem Silizium in diesem lokal gelöst und setzen lokal die Reaktivität der Si-Schmelze herab. Dies kann zum Abbruch der Umsetzungsreaktion führen.
Als Säuren eigenen sich beispielsweise Salzsäure und/oder Phosphorsäure, vorzugsweise in einem Konzentrationsbereich von 5 bis 10 Gew.-% bezogen auf das Gesamtgewicht der Säurelösung.

Unter dem Begriff "Silizieren" im Sinne der Erfindung wird die Umsetzung von Silizium- und Kohlenstoff-haltigen Verbindungen zu SiC verstanden.

Unter dem Begriff "verkokbar" im Sinne der Erfindung werden Stoffe verstanden, aus denen beim Erhitzen über 500°C unter inerter Atmosphäre ein Rückstand zurückbleibt, der mindestens zu 85 Gew.-% aus Kohlenstoff, vorzugsweise zu mindestens 95 Gew.-% bezogen auf das Gesamtgewicht des Rückstandes aus Kohlenstoff besteht.

Unter dem Begriff "Bindemittel" im Sinne der Erfindung werden Stoffe verstanden, die beim Vermischen der Kohlenstoff-haltigen Verbindungen eine Masse bilden, aus der ein Kohlenstoff-haltiger Formkörper gebildet werden kann.

Als Bindemittel werden vorzugsweise organische Harze verwendet. Besonders bevorzugt sind carbonisierbare Harze. Carbonisierbare Harze sind Harze, welche verkokbar sind. Dabei sind Harze mit aromatischen Kernen und Epoxydharze besonders bevorzugt. Als sehr geeignet haben sich Phenolharze erwiesen. Vorzugsweise wird ein pulverförmiges Phenolharz wie Novolak verwendet. Novolake wirken zum einen für die Kohlepartikel als Binder, zum anderen setzen sie sich, da sie durch die Pyrolyse in einen sogenannten Glaskohlenstoff umgewandelt werden, ebenfalls mit freiem Silizium zu SiC um. Die Verwendung eines carbonisierbaren Harzes ist vorteilhaft für die Stabilität nach der Entbinderung und für die Stabilität im porösen Formkörper. Unter "Entbinderung" wird die pyrolytische Zersetzung der Bindemittel und anderer Hilfsstoffe verstanden, welche auch als Verkokungsprozess oder Carbonisierungsprozess bezeichnet werden kann. Ohne das carbonisierbare Harz liegen die Kohlenstoffpartikel nur in einem sehr schwach gebundenen Gerüst in dem Formkörper vor. Durch die Verwendung von carbonisierbarem Harz sind die Kohlenstoffpartikel nach der Entbinderung über das carbonisierte Harz in einem stabilen Formkörper gebunden. Die Bindung der Kohlenstoffpartikel über den carbonisierten Harz führt weiterhin zu einer Verbesserung der Stabilität der durch den Silizierprozess entstehenden SiC-Struktur.

Vorzugsweise enthält der Kohienstoff-haitige Formkörper wenigstens 20 Gew.-%, weiter bevorzugt wenigstens 30 Gew.-%, Kohlenstoff, wobei sich die Angabe Gew.-% auf das Gesamtgewicht des Kohlenstoff-haltigen Formkörpers bezieht. Besonders bevorzugt enthält der Kohlenstoff-haltige Formkörper wenigstens 90 Gew.-%, weiter bevorzugt wenigstens 99 Gew.-% Kohlenstoff. Im Idealfall beträgt der Kohlenstoffgehalt 100 Gew.-% Kohlenstoff in Form von Kohlepartikeln, die über einen Glaskohlenstoff, vorzugsweise pyrolysiertes Harz, gebunden sind.

Außer Kohlenstoff kann der Kohlenstoff-haltige Formkörper beispielsweise Ton oder Feuerfestmaterial enthalten.

Unter dem Begriff "Glaskohlenstoff" ist eine Kohlenstoffform mit ausgeprägter struktureller Fehlordnung und glasartigem Bruchbild zu verstehen. Die Kohlenstoffatome mit sp2-Bindung sind in ebenen Schichten mit hexagonaler Symmetrie angeordnet. Im Gegensatz zu Graphit sind diese Schichten bei glasartigem Kohlenstoff nicht regelmäßig über größere Bereiche hinweg geordnet. Bänder aus graphitisch geordnetem, übereinander geschichteten Strukturen bilden eine polymerähnliche Knäuelstruktur. Glaskohlenstoff ist im Makrobereich porenfrei, zwischen den Graphitschichten sind aber zahlreiche Hohlräume vorhanden. Dies führt zu einer außerordentlich hohen Korrosionsbeständigkeit gegen saure und alkalische Reagentien. Glaskohlenstoff wird lediglich durch Sauerstoff bei Temperaturen oberhalb von 600°C und oxidierende Schmelzen angegriffen. Glaskohlenstoff lässt sich im Harz-Kohlenstoffpulvergemisch gut umsetzen, eine externe Infiltration von Glaskohlenstoff mit Si-Schmelze ist nicht ohne weiteres möglich.

Als Flüssigphase werden vorzugsweise wässrige Lösungsmittelgemische, verwendet. Besonders bevorzugt wird Wasser verwendet.

Weiterhin werden der zu extrudierenden Mischung bevorzugt Extrusionshilfsmittel wie Plastifizierer, Wachse, Graphit und/oder Tenside, etc. zugesetzt. Diese Extrusionshilfsmittel bewirken eine verbesserte Gleitfähigkeit der Partikel zueinander und führen zu einer homogenen Verteilung sämtlicher Bestandteile während der Extrusion.

Der zu extrudierenden Mischung werden vorzugsweise auch Grünkörperbindemittel, beispielsweise Celluloseether oder Celluloseetherderivate, zugesetzt. Beispielsweise kann Methylhydroxypropylcellulose als Grünkörperbindemittel verwendet werden. Das Grünkörperbindemittel stabilisiert den nach der Extrusion erhaltenen Formkörper. Darüber hinaus fördert das Grünkörperbindemittel ebenfalls die Homogenisierung der verschiedenen Bestandteile des Gemisches während der Extrusion.

Bei einer bevorzugten Ausführungsform werden in die zu extrudierende Mischung auch Fasern eingearbeitet. Die Faser können beispielsweise Kohlenstofffasern und/oder Polymerfasern und/oder SiC-Kurzfasern, vorzugsweise Whisker, sein, denen unterschiedliche Funktionen zukommen.

Unter dem Begriff "Whisker" im Sinne der Erfindung werden monokristalline Kurzfasern verstanden. Kurzfasern aus SiC können zur Verstärkung der SiC-Struktur eingesetzt werden. Die SiC-Kurzfasern können eine Verbesserung der mechanischen Stabilität bewirken.

Die Kohlenstofffasern können eine Verbesserung der mechanischen Stabilität bewirken. Durch das Einbringen von Kohlenstofffasern auf Basis von PAN (Polyacrylnitril) oder Pech kann ein kohlenstofffaserverstärkter SiC-Kohlenstoff erhalten werden. Durch den Pyrolyseprozess werden die Kohlenstofffasern nicht beeinträchtigt und durch den Silizierprozess werden die Fasern von außen teilweise ansiliziert, d.h. der außenliegende Kohlenstoff wird teilweise zu SiC umgesetzt, die Kohlenstofffasern bleiben jedoch im Kern erhalten. Das Silizium setzt sich primär mit den Partikeln des biomorphen Kohlenstoffs zu SiC um und ummantelt die Kohlenstofffasern. Durch diese Ummantelung werden die Kohlenstofffasern vor eventuell auftretenden oxidierenden Bedingungen geschützt. Die eingebrachten Kohlenstofffasern führen zu einer deutlichen Verbesserung der Thermoshockstabilität, die insbesondere für Dieselrußfilter eine besondere Rolle spielt. Aufgrund ungleichmäßiger Rußbelastung kann es während des Regenerationsprozesses zu einem inhomogenen Abbrand auf bzw. in dem Filter kommen und damit zu einer inhomogenen Wärmebeaufschlagung des Filters, was aufgrund des großen thermischen Ausdehnungskoeffizienten des SiC zu extremen thermischen Spannungen im Filter und somit zu einem Bruch des Filters führen kann. Um dies zu vermeiden ist der SiC-haltige keramische Formkörper vorzugsweise in Segmente unterteilt, die mit einer Dehnungsfuge zusammengeklebt sind. Besonders bevorzugt ist der Klebstoff ein keramischer Feuerfestkleber, der durch Zumischung von thermisch hochleitfähigem Material eine Wärmeleitfähigkeit von mehr als 10 W/mK aufweist. Unter dem Begriff "Feuerfestkleber" versteht man erfindungsgemäß eine Masse auf keramischer Basis, die chemisch oder hydraulisch aushärtet und mindestens bis 1000°C, vorzugsweise bis 1600°C, temperaturbeständig ist.

Bei Verwendung von Polymerfasern können in dem Kohlenstoff-haltigen Formkörper nach der Durchführung einer Pyrolyse gerichtete, vorzugsweise lineare, Porenstrukturen erzeugt werden. Bei den Polymerfasern handelt es sich beispielsweise um organische Polymere, die bei der Pyrolyse verbrennen. Als Polymerfasern können beispielsweise PE-Fasern (Polyethylen-Fasern) verwendet werden. Als mögliche Polymerfasern können ferner auch Naturfasern wie Jute, Flachs, Cellulose oder Ligninfasern verwendet werden. Die Polymerfasern verbrennen teilweise oder vollständig bei der Pyrolyse und hinterlassen Hohlräume. Die Naturfasern werden bei der Pyrolyse zu Kohlenstofffasern umgewandelt, wodurch ihr Volumen abnimmt, bzw. auch verbrennt. Hierdurch können gerichtete Porenstrukturen erzeugt werden. Über den Faserdurchmesser und die Faserlänge der Kohlenstoff-Fasern kann sowohl der Porendurchmesser als auch die Porenlänge bzw. -tiefe definiert eingestellt werden. Bei Verwendung von Fasergemischen unterschiedlicher Faserlänge und/oder mit unterschiedlichem Faserdurchmesser kann in dem Formkörper eine definierte Porenstruktur oder Porenverteilung eingestellt werden. Hierdurch kann ein Kohlenstoff-haltiger Formkörper mit definierter Porengröße, Porenverteilung und Porentiefe hergestellt werden. Vorzugsweise werden Polymerfasern mit einer Faserlänge im Bereich von 0,5 bis 5 mm eingesetzt. Alternativ oder kumulativ zu den Polymerfasern kann auch ein Polymerpulver verwendet werden.

Nach der Extrusion wird der erhaltene Formkörper bevorzugt getrocknet und/oder pyrolysiert. Die Pyrolyse erfolgt bevorzugt in einer nichtoxidierenden Atmosphäre. Beispielsweise kann die Pyrolyse in einer Inertgasatmosphäre wie Stickstoff oder unter Vakuum durchgeführt werden. Die Pyrolyse kann bei einer Temperatur von 600 °C oder mehr durchgeführt werden. Bei der Pyrolyse werden die Extrusionshilfsmittel entfernt sowie die Bindemittel, wie beispielsweise Phenolharze, carbonisiert und unter Volumen- und Gewichtsreduktion in Glaskohlenstoff umgewandelt. Hierdurch bilden sich Poren in dem Formkörper. Die hier entstehende poröse Gesamtstruktur eignet sich besonders gut für die Infiltration mit Silizium oder Silizium-haltigen Substanzen.

Äußerst vorteilhaft können diese porösen Kohlenstoff-haltigen Formkörper als Massenprodukt und mithin sehr kostengünstig hergestellt werden, da diese sehr gut extrudierbar sind.

Die extrudierten Kohlenstoff-haltigen Formkörper können eine quaderförmige oder zylindrische Formgebung aufweisen. Die Formkörper können auch einen polygonalen Querschnitt, beispielsweise hexagonalen oder octogonalen Querschnitt, aufweisen. Vorzugsweise weisen die extrudierten Kohlenstoffhaltigen Formkörper sich entlang der Längsachse des Formkörpers erstreckende Kanäle auf, die im wesentlichen parallel zueinander angeordnet sind.

Hierfür können beispielsweise die in der DE 101 04 882 A1 und DE 102 13 016 A1 offenbarten Herstellungsverfahren, die hiermit unter Bezugnahme aufgenommen sind, verwendet werden.

Das erfindungsgemäße Herstellungsverfahren erfolgt vorzugsweise in drei Wärmebehandlungsstufen:
1. Trocknung des extrudierten Kohlenstoff-haltigen Formkörpers unter Bildung eines Grünkörpers
2. Pyrolyse unter inerter Atmosphäre, z.B. unter Stickstoff unter ständiger Spülung zum Austragen der Pyrolyseprodukte
3. Silizierung des Kohlenstoffs, vorzugsweise in sauerstofffreier Atmosphäre, beispielsweise unter Vakuum oder Argonatmosphäre.

Die Trocknung und die Pyrolyse erfolgt beispielsweise mit Mikrowellentechnik. Die Kohlenstoffpartikel koppeln aufgrund ihrer Leitfähigkeit an die Mikrowellenstrahlung an. Auf diese Weise können die Grünkörper mit der Hilfe von Mikrowellen schneller auf die Pyrolysetemperatur aufgeheizt werden. Vorzugsweise verwendet man ein Verfahren, bei dem der Grünkörper gleichzeitig mit konventioneller Heiztechnik von außen (beispielsweise durch Widerstandheizelemente wie Kantalheizer) und mit Mikrowellentechnik von innen aufgeheizt wird. Um einen Einfluss des inhomogenen Mikrowellenfeldes auf den Pyrolyseprozess zu vermeiden, wird die Temperaturbehandlung vorzugsweise in einem Durchlaufofen durchgeführt.

Im Trocknungs-Schritt wird das Wasser aus dem nassen extrudierten Grünkörper entfernt. Der so erhaltene trockene Formkörper weist eine sehr dichte Struktur auf, da er neben den Extrusionshilfsmitteln auch noch das nicht pyrolysierte Harz teilweise in angeschmolzenem Zustand enthält.

Durch die Pyrolyse werden alle Hilfsmittel wie der Celluloseether und die Seife aus der Struktur herausgebrannt. Weiterhin wird das verwendete Harz carbonisiert, d.h. es wird unter Abspaltung von Abbauprodukten in eine reine Kohlenstoffstruktur umgewandelt. Hierdurch verliert es deutlich an Volumen. Dieser kontrollierte Abrand der Hilfsmittel und eines Teiles des Harzes führt zu einer porösen Struktur. Es entsteht ein poröses Kohlenstoffgitter.

Die vorzugsweise durchgeführte Pyrolyse der extrudierten Kohlenstoff-haltigen Formkörper erfolgt vorzugsweise bei einer Temperatur von 600 bis 1000 °C, weiter bevorzugt von 700 bis 900 °C und besonders bevorzugt von 730 bis 850 °C vorzugsweise in inerter, Sauerstoff-freier Atmosphäre. Um eine Zerstörung der Kohlenstoff-haltigen Formkörper durch die bei der pyrolytischen Zersetzung der organischen Bindemittel und/oder Extrusionshilfsmittel entstehenden Gase zu verhindern, wird vorzugsweise bis zu einer Temperatur von ca. 400 bis 500 °C eine langsame Heizrate gewähit, beispielsweise von 1 bis 2 °C/min.. Im nachfolgenden kann eine höhere Heizrate, beispielsweise von 5 °C/min., verwendet werden. Die Pyrolysetemperatur wird vorzugsweise für 0,5 bis 1 Stunde gehalten.

Der in Schritt (a) bereitgestellte Kohlenstoff-haltige Formkörper wird in Schritt (b) siliziert.

In Schritt (b) wird der poröse Kohlenstoff-haltige Formkörper durch Einbringen von Silizium und/oder Silizium-haltigen Substanzen in einen silizierten Kohlenstoffhaltigen Formkörper überführt. Die Silizierung erfolgt dabei unter Wärmebeaufschlagung, so dass eine Umsetzung von Silizium und/oder Siliziumhaltigen Substanzen und dem Kohlenstoff, vorzugsweise Aktivkohle, zu β-SiC erfolgt.

Die Silizierung kann durch Si-Schmelzinfiltration, Si-Gasinfiltration, Infiltration mit Si-organischen Verbindungen oder Silizierung mittels einer aufgebrachten Si-enthaltenden Schicht, vorzugsweise mittels eines keramischen Schlickers, durchgeführt werden. Unter "keramischem Schlicker" im Sinne der Erfindung wird eine Suspension verstanden, die ein keramisches Pulver, ein Bindemittel, ein Lösungsmittel und/oder organische Zusätze enthält. Die Silizierung der, vorzugsweise pyrolysierten, Kohlenstoff-haltigen Formkörper findet unter Sauerstoff-freier Atmosphäre oder bei Unterdruck, vorzugsweise bei etwa 100 Pa, statt.

Es ist bevorzugt, dass die Silizierung durch Einbringen von flüssigem und/oder gasförmigem Silizium erfolgt. Weiterhin ist bevorzugt, dass das flüssige Silizium eine Siliziumschmelze ist.

Bei einer bevorzugten Weiterbildung des erfindungsgemäßen Verfahrens wird die Silizierung mit einer Siliziumschmelze durchgeführt. Für die Silizium-Schmelzphaseninfiltration ist eine Docht-Silizierung geeignet, bei der der vorzugsweise pyrolysierte, Kohlenstoff-haltige Formkörper auf einen porösen Kohlenstoff-Körper oder einen SiC-Körper gestellt wird. Der poröse Kohlenstoff-Körper und/oder der SiC-Körper wirken dabei als Docht. Das flüssige bzw. geschmolzene Silizium gelangt über den Docht in den Kohlenstoff-haltigen Formkörper.

Aufgrund der porösen Struktur des extrudierten und vorzugsweise pyrolysierten Kohlenstoff-haltigen Formkörpers erfolgt eine Infiltration des Kohlenstoff-haltigen Formkörpers mit dem flüssigen bzw. geschmolzenen Silizium. Während und im Anschluss an die Infiltration erfolgt eine chemische Umsetzung von Silizium und Kohlenstoff unter Erhalt von β-SiC.

Die Silizierung erfolgt vorzugsweise bei Temperaturen oberhalb von 1350°C. Besonders bevorzugt wird die Silizierung bei Temperaturen, die oberhalb der Schmelztemperatur von Silizium (oberhalb 1450°C) und vorzugsweise zwischen 1420 C bis 1700 °C liegen, durchgeführt. Die Silizierung wird vorzugsweise unter Vakuum oder Argon als Schutzgas durchgeführt. Aufgrund der sehr großen Kontaktfläche zwischen dem Silizium und dem Kohlenstoff ergeben sich sehr kurze Diffusionswege und damit eine sehr schnelle Kinetik für die Umsetzung des Kohlenstoffs mit dem Silizium zu β-SiC. Unter Vakuum oder Schutzgasatmosphäre kann deswegen die Umsetzung zu β-SiC schon bei Temperaturen unterhalb des Schmelzpunktes erfolgen.

Eine Haltezeit von 1 bis 4 Stunden bei der Silizierungstemperatur hat sich als sehr geeignet erwiesen. Es handelt sich hierbei nicht um einen klassischen Sintervorgang, sondern um die chemische Umwandlung in eine neue Verbindung. Nach der Silizierung kann der silizierte Formkörper relativ einfach und ohne diesen zu zerstören vom Docht wieder abgetrennt werden. Geeignet sind aber auch andere Silizierungsarten, z.B. bei denen das Bauteil direkt in ein Pulverbett aus Si gestellt wird.

Bei einer weiteren Variante des erfindungsgemäßen Verfahrens wird die Silizierung mit gasförmigem Silizium und/oder einer gasförmigen Silizium-haltigen Substanz bei Temperaturen oberhalb von 800 °C durchgeführt. Die Temperaturen sollten nicht höher als 1900°C sein, da sonst α-SiC entsteht. Vorzugsweise besteht das in dem erfindungsgemäßen porösen β-SiC-haltige Formkörper enthaltenen SiC zu 90 Gew.-%, vorzugsweise zu 95 %, weiter bevorzugt zu 98 Gew.-besonders bevorzugt zu 100% aus β-SiC (kubische Kristallform des SiC). Diese Wertangaben beziehen sich auf das Gewicht an SiC ohne Legierungselemente. β-SiC bildet sich bei Temperaturen zwischen 1450 und 1900 °C aus Silizium und Kohlenstoff.

Die gasförmigen Silizium-haltigen Substanzen können beispielsweise Oxide oder Suboxide von Silizium sein wie zum Beispiel SiO und/oder SiO₂. Als gasförmige Silizium-haltige Substanzen können auch organische Siliziumverbindungen bzw. siliziumorganische Verbindungen verwendet werden.

Die organische Siliziumverbindung kann bspw. CH₃SiCl₃ sein. Bei einer besonders bevorzugten Ausführungsform wird nach der Silizierung mit gasförmigem Si und/oder einer gasförmigen Silizium-haltigen Substanz eine Temperbehandlung bei Temperaturen oberhalb der Dampfsilizierungstemperatur durchgeführt.

Die Silizium-haltige Substanz wirkt dabei als Silizium-Vorstufe, die während der Silizierung in SiC oder Silizium überführt wird.

Bei einer weiteren Weiterbildung des erfindungsgemäßen Verfahrens erfolgt die Silizierung durch Einbringen eines flüssigen und/oder gasförmigen Gemisches aus Silizium und weiteren Metallen, die den Schmelzpunkt des Siliziums absenken und somit zu einer Erniedrigung der Temperatur für die Bildung von β-SiC führen. Im folgenden werden Silizium-Metall-Gemische auch als Siliziumlegierungen bezeichnet.

Bevorzugt werden weitere Metalle, die Silizidbildner und/oder Carbidbildner sind, und vorzugsweise aus der Gruppe, die aus Mo, Al, Fe, Ti, Cr, Ni, Mg, Cu, Co, Mn und Gemischen und Legierungen davon besteht, ausgewählt sind, verwendet. Besonders bevorzugt sind Fe, Cr, Ti, Al und/oder Gemische davon.

Bei einer besonders bevorzugten Ausführungsform wird die Silizierung mit Silizium und/oder einer Silizium-haltigen Substanz durchgeführt, die vorzugsweise insgesamt 1 bis 90 Gew.-% Silizidbildner bzw. Legierungselemente, bezogen auf das Gewicht an Si, umfasst.

Bei einer weiteren Ausführungsform wird die Silizierung mit Silizium und/oder Silizium-haltigen Substanzen durchgeführt, die Aluminium mit einem Anteil von 1 bis 35 Gew.-% bezogen auf das Gewicht an Silizium umfasst. Durch die Zugabe von Aluminium in einem Bereich von 1 bis 35 Gew.-% wird der Schmelzpunkt der Si-Legierung auf bis zu 1150°C abgesenkt.

Bei einer weiteren Ausführungsform wird die Silizierung mit Silizium und/oder Silizium-haltigen Substanzen durchgeführt, die Titan mit einem Anteil von 5 bis 90 Gew.-%, besonders bevorzugt 7 bis 9 Gew.-% oder 81 bis 83 Gew.-% bezogen auf das Gewicht an Silizium umfasst. Durch die Zugabe von 5 Gew.-% bis 90 Gew.-% Titan wird der Schmelzpunkt der Si-Legierung auf bis zu 1350°C abgesenkt.

Die Si-Legierungselementschmelze weist einen deutlich niedrigeren Schmelzpunkt als das Silizium selbst auf, wodurch sich die Silizierungstemperatur reduzieren lässt. Vorzugsweise erfolgt die Umsetzung von Silizium und Kohlenstoff bei Temperaturen oberhalb des Schmelzpunktes des Siliziums bzw. der Siliziumlegierung. Entsprechend der Schmelzpunkterniedrigung, die durch die zugemischten Metalle erreicht wird, wird das Verfahren vorzugsweise bei Temperaturen durchgeführt, die über dem Schmelzpunkt der Siliziumlegierung liegt, die aber unter dem Schmelzpunkt von reinem Silizium liegt. Besonders bevorzugt liegt die Silizierungstemperatur 40°C über dem Schmelzpunkt der SiliziumLegierung.

Des weiteren hat sich gezeigt, dass bei Verwendung von Siliziumlegierungen bei der Schmelzinfiltration ferner die sprunghafte Volumenzunahme, die bei einer Erstarrung einer reinen Siliziumschmelze auftritt, reduziert oder sogar weitgehend vermieden wird.

Bei Verwendung einer Siliziumlegierung bei der Silizierung des Kohlenstoffhaltigen Formkörpers können die durch die Verspannungskräfte des erstarrten Siliziums bedingten Probleme vermieden werden und mithin eine höhere Festigkeit, insbesondere bei thermischer und mechanischer Wechselbeanspruchung, erreicht werden. Äußerst vorteilhaft kann zugleich das Herstellungsverfahren einfacher und kostengünstiger gestaltet werden.

Bei Verwendung von Silizidbildnern wie Mo, Fe und/oder Ti kann der Anteil des freien Si im Endprodukt verringert werden.

Wenn bei den verwendeten Legierungselementen Aluminium enthalten ist, kann dieses nach der Silizierung durch Zugabe von Sauerstoff bzw. Sauerstoff-haltiger Atmosphäre zu Aluminiumoxid oxidiert werden. Das Aluminiumoxid kann dabei vorteilhaft als Haftvermittler für katalytisch aktive Beschichtungen, die auf dem porösen oder hochporösen keramischen β-SiC-haltigen Formkörper in einem nachgeschalteten Beschichtungsprozess aufgebracht werden können, wirken.

Bei einer weiteren Verfahrensvariante erfolgt die Silizierung, indem zunächst pulverförmiges Silizium und/oder pulverförmige Silizium-haltige Substanzen auf den Kohlenstoff-haltigen Formkörper, vorzugsweise in Form eines Si-haltigen keramischen Schlickers, aufgebracht wird bzw. werden und nachfolgend das aufgebrachte Silizium und/oder die Silizium-haltigen Substanzen verflüssigt oder geschmolzen wird bzw. werden und in den Kohlenstoff-haltigen Formkörper eindringen.

Bei einer vorteilhaften Ausführungsform wird eine Silizium-haltige Substanz in Pulverform und/oder ein Silizium-Pulver als kristallines Pulver verwendet, wobei die Pulver vorzugsweise eine durchschnittliche Partikelgröße von 0,5 bis 50 µm aufweisen. Den vorgenannten Pulvern können auch Legierungselemente in Pulverform beigemengt werden.

Die Silizierung kann dabei mittels einer aufgebrachten Silizium-haltigen Schicht durchgeführt werden. Beispielsweise kann der, vorzugsweise pyrolysierte, Kohlenstoff-haitige Formkörper mit Hilfe eines Schlickers bzw. einer Suspension überzogen werden. Die Aufbringung der Suspension kann beispielsweise durch Besprühen des Kohlenstoff-haltigen Formkörpers mit der Suspension oder durch Eintauchen des Kohlenstoff-haltigen Formkörpers in die Suspension erfolgen. Das Beschichten durch Eintauchen kann mittels eines Dip-Coating-Verfahrens erfolgen. Der Kohlenstoff-haltige Formkörper wird dabei mit einer dünnen Schicht aus Siliziumpulver bzw. einem Pulver einer Silizium-haltigen Substanz überzogen.

Das Silizium und/oder die Silzium-haltige Substanz wird dabei homogen auf dem gesamten Kohlenstoff-haltigen Formkörper verteilt. Wenn der Kohlstoff-haltige Formkörper eine Wabenstruktur bzw. Kanäle aufweist, wird das Silizium schon vor Erreichen der Schmelztemperatur in der gesamten Struktur verteilt, wodurch der Silizierungsprozeß erheblich beschleunigt werden kann.

Bei einer weiteren bevorzugten Ausführungsform erfolgt die Silizierung durch Einbringen von gasförmigen und/oder flüssigen Silizium-haltigen Substanzen.

Sowohl bei Verwendung von gasförmigen als auch von flüssigen, d.h. geschmolzenen oder in Lösungsmittel gelösten, Silizium-haltigen Substanzen gelangen die Silizium-haltigen Substanzen schnell in den Kohlenstoff-haltigen Formkörper.

Neben der Silizium-Schmelzphasensilizierung können die extrudierten Kohlenstoff-Formkörper auch über eine Silizierung mit gasförmigen Silizium-haltigen Substanzen, beispielsweise Si-Dampf, SiO-Dampf, Dampf von Si-organischen Verbindungen, wie z.B. CH₃SiCl₃, bei Temperaturen oberhalb von 800 °C in β-SiC umgesetzt werden.

Bei Verwendung von Silizium-organischen Verbindungen kann der Anteil an abgeschiedenem Silizium in der umgesetzten β-SiC-Keramik kontrolliert werden. Im Unterschied zu der Silizierung über die Silizium-Schmelzphase bildet sich nach der Silizierung über die Gasphase vorzugsweise eine Mikrostruktur in der SiC-Keramik mit kleineren SiC-Körnern im Bereich von unter 1 µm aus. Zur Erhöhung der mechanischen Stabilität und zur Einstellung einer bestimmten SiC-Korngröße kann nach der Gasphasen-Silizierung zusätzlich eine Temperung bei Temperaturen oberhalb der Gasphasen-Silizierungstemperatur durchgeführt werden.

Eine weitere Möglichkeit der Umsetzung des extrudierten Kohlenstoff-haltigen Formkörpers in SiC ist die Infiltration einer Siliziumhaltigen Verbindung, beispielsweise Tetraethylorthosilikat (TEOS), Polysiloxan, Polycarbosilan und/oder Polysilazan und/oder Si/SiO-Pulver. Die nachfolgende reaktive Umsetzung in β-SiC-Keramik erfolgt dann vorzugsweise in inerter Atmosphäre bei Temperaturen von vorzugsweise oberhalb von etwa 600 °C. Im Unterschied zur Silizierung über der Silizium-Schmelzphase kann hier die Infiltration bei Raumtemperatur durchgeführt werden, d.h. nur der anschließende Reaktionsschritt wird bei höheren Temperaturen durchgeführt.

Die Pyrolyse, sofern eine solche durchgeführt wird, des Kohlenstoff-haltigen Formkörpers und die Silizierung des Kohlenstoff-haltigen Formkörpers können in zwei getrennten Verfahrensschritten durchgeführt werden. Die zweistufige Verfahrensführung der Pyrolyse und Silizierung kann auch in einem einstufigen Verfahren zusammengefasst werden. Die bei der pyrolytischen Zersetzung des Bindemittels und etwaig vorhandenerer Extrusionshilfsmittel entstehenden gasförmigen Produkte (Pyrolysate) stellen keine wesentliche Beeinträchtigung der Silizierung dar. Gemäß einer bevorzugten Weiterbildung der Erfindung werden die Silizierung durch Infiltration mit Silizium und/oder einer Si-enthaltenden Verbindung und die Pyrolyse sowie die reaktive Umsetzung zu SiC-, SiC/C-, Si/SiC- und/oder Si/SiC/C-Keramiken in inerter Atmosphäre in einem Verfahrensschritt zusammen durchgeführt. Gemäß einer weiteren bevorzugten Weiterbildung findet die Pyrolyse unter Stickstoffatmosphäre unter ständigen Spülen statt, damit die Pyrolyseprodukte abgeführt werden. Die anschließende Silizierung findet dann vorzugsweise unter Vakuum oder Argon statt, wobei bei der Verwendung von Argon nicht permanent gespült wird.

Bei einer Weiterbildung des erfindungsgemäßen Verfahrens wird nach der Silizierung in Schritt (b) die Porosität des erhaltenen β-SiC-haltigen Formkörpers durch Entfernen von nicht zu SiC umgesetztem Silizium erhöht.

Gemäß einer Variante erfolgt das Entfernen von Silizium durch chemisches Lösen von Silizium unter Einwirkung von Säure und/oder Lauge. Das Herauslösen des freien Siliziums kann durch Behandeln des silizierten Formkörpers, d.h. des β-SiC-haltigen keramischen Formkörpers beispielsweise mit HNO₃, HCl, NaOH und/oder KOH erfolgen. Die Behandlung mit Säure und Lauge kann dabei in alternierender Reihenfolge erfolgen.

Bei einer weiteren Variante erfolgt das Entfernen von Silizium unter Aufheizen des β-SiC-haltigen Formkörpers und Verflüssigen und/oder Verdampfen von Silizium, wobei vorzugsweise das Entfernen des verflüssigten und/oder verdampften Siliziums zusätzlich durch Anlegen von Unterdruck unterstützt wird.

Das Herauslösen des freien Siliziums kann beispielsweise durch Heraussaugen von flüssigem Silizium mittels eines porösen Materials, das mit dem silizierten Formkörper in Kontakt gebracht wird und das flüssige Silizium aufnimmt, bei Temperaturen oberhalb des Schmelzpunktes von Silizium erfolgen. Geeignete poröse Körper sind poröse Keramiken oder poröser Kohlenstoff. Bei einer weiteren Variante wird ein Unterdruck an den silizierten Formkörper angelegt und das freie und flüssige Silizium entfernt.

Das Herauslösen des noch freien Siliziums kann auch durch Abdampfen des Siliziums bei einer geeigneten Temperatur oberhalb der Dampftemperatur des Siliziums, vorzugsweise bei oberhalb 1400 °C, besonders bevorzugt bei Temperaturen zwischen 1400°C und 1900°C erfolgen. Bei einer Ausführungsform wird das Abdampfen des Siliziums bei Temperaturen zwischen 1400°C und 1700°C durchgeführt.

Durch das nachträgliche Entfernen von Silizium kann zum einen der Siliziumgehalt in dem β-SiC-haltigen keramischen Formkörper und zum anderen die Porosität eingestellt werden. Der erfindungsgemäße poröse β-SiC-Formkörper weist eine Porosität von 20 bis 80 %, vorzugsweise 30 bis 65% auf. % Porosität bedeutet offenes Volumen bezogen auf das Volumen der festen Struktur. Unter Porosität versteht man die Summe der Hohlräume in einem festen, porösen Körper, bezogen auf dessen äußeres Volumen. Die Summe der Hohlräume wird dabei in % bezogen auf das äußere Volumen angegeben, welches 100% entspricht.

Der erfindungsgemäße Formkörper weist eine mittlere Porengröße im Bereich von 0,1 bis 15 µm auf. Unter der mittleren Porengröße ist die durchschnittliche Porengröße der Poren in dem porösen β-SiC-Formkörper zu verstehen, die sich aus dem Mittelwert aller Poren ergibt. Die Porengröße kann auch als Porendurchmesser bezeichnet werden.

Vorzugsweise besteht das in dem erfindungsgemäßen porösen β-SiC-haltige Formkörper enthaltenen β-SiC zu 90 Gew.-%, vorzugsweise zu 95 %, weiter bevorzugt zu 98 Ges.-% besonders bevorzugt zu 100% aus β-SiC (kubische Kristallform des SiC). Diese Wertangaben beziehen sich auf SiC ohne Legierungselemente. β-SiC bildet sich bei Temperaturen zwischen 1450 und 1900 °C aus Silizium und Kohlenstoff.

Der poröse β-SiC-haltige Formkörper weist ein dreidimensionales, durchgehendes β-SiC-Gerüst auf, welches vorzugsweise β-SiC-Kistalle mit einer Korngröße zwischen 0,1 µm und 100 µm, besonders bevorzugt zwischen 0,1 µm und 10 µm, umfasst.

Neben SiC-Phasen können auch Si/SiC-Phasen, SiC/C-Phasen und/oder Si/SiC/C-Phasen in dem β-SiC-haltigen keramischen Formkörper vorliegen. Die Bildung dieser Phasen kann beispielsweise von dem eingestellten stöchiometrischen Verhältnis von Si zu C und/oder auch von der Art der verwendeten Silizium-haltigen Substanz abhängen. Ferner können auch Metallcarbide und Metalsilizide zusätzlich zu den oben genannten Phasen enthalten sein,

Der gemäß dem erfindungsgemäßen Verfahren hergestellte β-SiC-haltige keramische Formkörper ist ein Silizium-infiltrierter Kohlenstoff-haltiger Formkörper. Die im Hinblick auf das Verfahren gemachten Ausführungen gelten entsprechend für den erfindungsgemäßen β-SiC-haltigen keramischen Formkörper.

Bevorzugte Weiterbildungen des porösen β-sic-haltigen Formkörpers sind in den Unteransprüchen 14 bis 21 angegeben.

Der erfindungsgemäße poröse β-SiC-haltige keramische Formkörper weist eine poröse Matrix auf, die SiC, SiC/C, Si/SiC und/oder Si/SiC/C umfasst oder daraus besteht Vorzugsweise ist die poröse Matrix hochporös. Die Matrix des erfindungsgemäßen Formkörpers eignet sich als Partikelfilter, beispielsweise Dieselrußpartikelfilter.

Vorzugsweise weist der P-SiC-haltige keramische Formkörper eine Kanäle-haltige Struktur auf. Vorzugsweise weist die Kanäte-haltlge Struktur eine Kanaldichte von 50 bis 400 Kanälen/inch², weiter bevorzugt von 180 bis 300 Kanälen /inch², besonders bevorzugt von 200 bis 300 Kanälen /inch², auf. Da die Abscheidung von Rußpartikeln auf dem porösen β-SiC-haltige Formkörper, welcher insbesondere als Rußfilter für einen PKW ausgebildet ist, auf der Oberfläche erfolgt, sind besonders feinzellige Kanalstrukturen, d.h. Strukturen mit hoher Kanaldichte, sehr gut geeignet. Hierdurch wird bei großer Filteroberfläche ein geringer Druckabfall erreicht Dies ist wichtig, da durch einen solchen Dieselrußfilter beispielsweise 10.000 l/min Gas durchgeführt werden müssen,

Die Kanalwandstärken sollten dabei bei dem porösen β-SiC -Formkörper so dünn wie möglich sein. Es musste ein Optimum zwischen mechanischer Festigkeit des gesamten Filters und der Kanalwandstärke gefunden werden. Weiterhin kommt bei der Kanalwandwandstärke noch hinzu, dass je nach eingesetztem Material sich nicht beliebig dünne Wände extrudieren lassen. Insbesondere der Einsatz von SiC in der Extrusionsmasse schränkt die Möglichkeiten zur Reduzierung der Wandstärken deutlich ein.

Vorzugsweise weisen die Kanalwände eine Dicke in einem Bereich von 100 µm bis 450 µm, bevorzugt von 150 µm bis 400 µm, vorzugsweise von 200 µm bis 380 µm, weiter bevorzugt von 220 µm bis 350 µm, auf.

Hierdurch wird eine ausreichende Stabilität bei einer deutlich vergrößerten Oberfläche erreicht, was die Herstellung von kleineren Filtern ermöglicht. Gerade für den Abgasbereich von Dieset-PKW ist es notwendig, Filter mit kleinerem Volumen bereitzustellen. Die Herstellung dünnerer Wandstärken wird erst durch das erfindungsgemäße Herstellungsverfahren ermöglicht, da kein SiC in der Ausgangsmasse vorliegt. Die Reduzierung der Wandstärke führt bereits bei einer Reduzierung der Wandstärke um 70 µm und bei gleichzeitiger Erhöhung der Kanaldichte zu einer deutlichen Erhöhung der Oberfläche des Filters bei gleichen Volumen.

Durch die Kombination eines Filters mit hoher Kanalzahl pro inch² (Kanaldichte) und geringen Wandstärken wird eine deutlich erhöhte Filteroberfläche erreicht, die die Bereitstellung von kleineren Filtern bei gleichbleibender Oberfläche ermöglicht.

Der poröse β-SiC-Formkörper umfasst ein gewachsenes, durchgehendes dreidimensionales Kristallgerüst. Unter "dreidimensionalem, durchgehendem β-SiC-Gerüst" im Sinne der Erfindung ist eine β-SiC-Struktur zu verstehen, die reaktionsgebundene β-SiC umfasst, welches ohne weitere Bindemittel eine feste Struktur ausbildet. Bei herkömmlichen SiC-Strukturen wird das SiC-Gerüst über ein Bindemittel, beispielsweise geschmolzenes Silizium gebunden. Der große Vorteil eines durchgehenden SiC-Gerüstes ist, dass der Formkörper wesentlich stabiler und beständiger gegenüber aggressiven Medien, wie beispielsweise Autoabgasen, ist. Bei herkömmlichen SiC-Strukturen , bei denen das SiC-Gerüst über Bindemittel gebunden ist, erfolgt über die Zeit ein Abbau des Bindemittels beispielsweise durch Oxidation, wodurch der Formkörper zerstört wird. Den Erfindern ist es somit überraschenderweise gelungen einen poröse β-SiC-Formkörper bereitzustellen, der eine überragende thermische, chemische und mechanische Beständigkeit aufweist.

Bei einer bevorzugten Ausführungsform weist die Matrix des keramischen Formkörpers eine im wesentlichen aus β-SiC und etwaig nicht umgesetztem Kohlenstoff bestehende Skelettstruktur auf. Dabei kann im Kern der Skelettstruktur noch Kohlenstoff enthalten sein, der mit SiC ummantelt ist. Des weiteren kann auf dem β-SiC eine weitere Schicht aus Silizium und/oder SiC und/oder SiO₂ angeordnet sein. Eine SiO₂-Schicht kann die darunter liegende Siliziumschicht vor weiterer Oxidation schützen.

Gemäß einer bevorzugten Weiterbildung enthält der β-SiC-haltige Formkörper
0 bis 50 Gew.-%, vorzugsweise von 0 bis 10 Gew.-%, besonders bevorzugt 0 bis 5 Gew.-% Kohlenstoff,
30 bis 100 Gew.%, vorzugsweise 70 bis 100 Gew.-%, SiC,
0 bis 70 Gew.-%, vorzugsweise 0 bis 20 Gew.-%, besonders bevorzugt 5 bis 10 Gew.-% Si, wobei sich die Angaben in Gew.-% jeweils auf das Gesamtgewicht des SiC-haltigen Formkörpers beziehen und sich unter Berücksichtigung etwaiger weiterer Komponenten auf 100 Gew.-% addieren.

Ferner kann der β-SiC-haltige Formkörper neben β-SiC auch Phasen Metallcarbide umfassen. Vorzugsweise werden die weiteren Metalle aus der Gruppe, die aus Mo, Al, Fe, Ti, Cr, Ni, Mg, Cu, Co , Mn, Gemischen und Legierungen davon besteht, ausgewählt. Die weiteren Metalle können dabei in einer Menge von 5 bis zu 90 Gew.-%, wobei sich die Angabe Gew.-% auf das Gewicht an Silizium bezieht, vorliegen.

Bevorzugt umfasst der β-SiC-haltige Formkörper neben β-SiC auch Phasen aus oder mit Eisensilizid(en), vorzugsweise FeSi₂ und/oder FeSi. Chromsilizid(en), vorzugsweise CrSi₂, und/oder Titansilizid(en), vorzugsweise TiSi₂, Ti₃Si₅ und/oder TiC₂Si₃, und/oder Cobaltsilizld(en), vorzugsweise CoSi₂, CoSi und/oder CoSi₂

Gemäß einer weiteren Ausführungsform ist der β-SiC-haltige Formkörper faserverstärkt. Die Fasern, vorzugsweise Kohlenstofffasern (beispielsweise PAN oder Pechfasern) und/oder Kurzfasern, vorzugsweise Whisker, aus SiC werden bereits in die zu extrudierende Masse bei der Herstellung des Kohlenstoff-haltigen Formkörpers eingebracht und bewirken eine Festigkeltssteigerung des Formkörpers. Unter dem Begriff "Whisker" im Sinne der Erfindung werden monokristalline Kurzfasem verstanden. Die SiC-Kurzfasem bewirken eine reine mechanische Fesügkeitssteigerung. Die Kohlenstofffasern bewirken hingegen eine deutliche Verbesserung der Thermoschocksstabilität. Das Silizium setzt sich primär mit den Partikeln des biomorphen Kohlenstoffs zu SiC um und ummantelt die Kohlenstofffasem. Durch diese Ummantelung werden die Kohlenstofffasern vor eventuell auftretenden oxidierenden Bedingungen geschützt. Vorzugsweise werden Kohlenstofffasern mit einer Faserlänge im Bereich von 0.5 bis 5 mm eingesetzt.

Durch die Verwendung von Natur- und/oder Polymerfasern können in dem Formkörper auch gerichtete, vorzugsweise lineare, Porenstrukturen erzeugt werden. Bei den Polymerfasern handelt es sich beispielsweise um organische Polymere, die bei der Pyrolyse verbrennen. Als Polymerfasern können beispielsweise PE-Fasern verwendet werden. Als mögliche Polymerfasern können ferner auch Naturfasern wie Jute, Flachs, Cellulose oder Ligninfasern verwendet werden. Die Fasern werden bei der vorzugsweise durchgeführten Pyrolyse pyrolysiert. Dadurch werden in dem Kohlenstoff-haltigen Formkörper, vorzugsweise lineare, Poren mit definiertem Porendurchmesser erzeugt, die nach der Silizierung in dem β-SiC-haltigen keramischen Formkörper enthalten sind. Über den Durchmesser der verwendeten Fasern lässt sich der Durchmesser der gerichteten oder linearen Poren einstellen. Vorzugsweise liegt die Länge der Natur- und/oder Kohlenstofffasern in einem Bereich von 0,1 bis 0,5 mm. Die durch die Pyrolyse entstehenden Poren haben vorzugsweise eine Länge von 50 bis 500µm. Vorzugsweise liegt der Durchmesser der gerichteten oder linearen Poren in einem Bereich von 5 bis 50 µm, weiter bevorzugt von 8 bis 25 µm. Die Einstellung eines definierten Porendurchmessers ermöglicht äußerst vorteilhaft die Bereitstellung von Filtern mit definierten Filtereigenschaften. Die definierte Porengröße der gerichteten Poren kann so eingestellt werden, dass beispielsweise die Trennung eines Partikelgemisches in verschiedene Partikel mit verschiedenen Größen möglich ist.

Der β-SiC-haltige Formkörper weist vorzugsweise eine quaderförmige oder zylindrische Formgebung auf. Die Formkörper können auch einen polygonalen Querschnitt, beispielsweise hexagonalen oder octogonalen Querschnitt, aufweisen. Vorzugsweise weisen die extrudierten Kohlenstoff-haltigen Formkörper sich entlang der Längsachse des Formkörpers erstreckende Kanäle auf, die im wesentlichen parallel zueinander angeordnet sind.

Gemäß einer bevorzugten Variante sind die Kanäle nicht durchgehend. Die Kanäle sind bei dieser Variante vorzugsweise wechselseitig verschlossen. Das heißt, die im wesentlichen parallel zueinander liegenden Kanäle sind abwechselnd an ihrem einen oder anderen Ende verschlossen. Dies ermöglicht die Verwendung eines solchen β-SiC-haltigen keramischen Formkörpers als Filter, wobei das zu filtrierende Medium durch die Wandung von einem Kanal in den Nachbarkanal übertritt und die partikulären Verunreinigungen zurückgehalten werden. Bei einer vorteilhaften Ausführungsform weist der hochporöse keramische Formkörper Kanäle und poröse Membranstege auf.

Gemäß einer bevorzugten Ausführungsform ist der β-SiC-haltige Formkörper ein Filter, vorzugsweise ein Partikelfilter.

Die der Erfindung zugrundeliegende Aufgabe wird des weiteren durch ein System gelöst, das einen porösen β-SiC-haltigen keramischen Formkörper nach einem der Ansprüche 13 bis 21 enthält. Der erfindungsgemäße Formkörper eignet sich mithin zu einer Verwendung in einem Filtersystem.

Das System kann beispielsweise ein Abgassystem einer Verbrennungskraftmaschine oder eines Kraftfahrzeuges sein, in dem der poröse β-SiC-haltige keramische Formkörper angeordnet ist.

Durch die nachfolgenden Beispiele soll die vorliegende Erfindung näher erläutert, aber in keiner Weise beschränkt werden.

Der poröse β-SiC-haltige keramische Formkörper gemäß der vorliegenden Erfindung kann auch als Katalysatorträgerstruktur sowie entsprechenden Katalysatorsystemen verwendet werden.

Die porösen β-SiC-haltigen Formkörper können auch einen polygonalen Querschnitt, beispielsweise hexagonalen oder octogonalen Querschnitt, aufweisen. Vorzugsweise weisen die extrudierten Kohlenstoff-haltigen Formkörper sich entlang der Längsachse des Formkörpers erstreckende Kanäle auf, die wesentlichen parallel zueinander angeordnet sind.

### Figuren

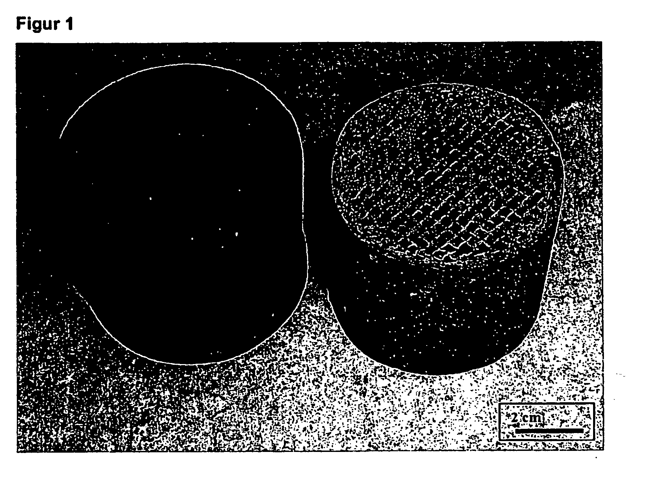

Figur 1 zeigt Bauteile mit Kanälen: links: Extrudierter Kohlenstoff-haltiger Formkörper und rechts: SiSiC-Keramik.
Figur 2
   zeigt eine Rasterelektronenmikrospopie (REM) Aufnahme des silizierten Formkörpers. (SiSiC-Keramik)

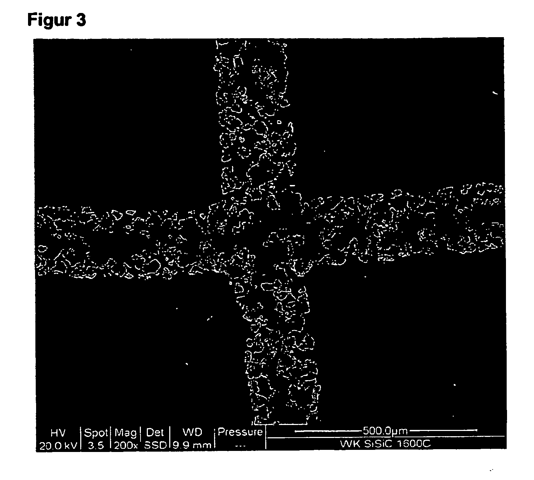

Figur 3 zeigt eine Rasterelektronenmikroskopie (REM) Aufnahme des silizierten Formkörpers nach einem teilweisen Herauslösen des nichtreagierten Si.

### Beispiele

### Beispiel 1 - SiSiC-Formkörper mit Kanälen

Die extrudierten Kohlenstoff-haltigen, Kanäle-haltigen Formkörper, die als Formkörper für hochporöse SiC-, SiSiC- oder SiSiC/C-Keramiken verwendet wurden, wurden aus Aktivkohlepulvern und Bindemitteln hergestellt. Ausgangspunkt zur Herstellung der Kanäle-haltigen Formkörper aus Aktivkohle sind die in DE 101 04 882 A1 und DE 102 13 016 A1 beschriebenen Herstellungsverfahren. Als Bindemittel wurde jeweils ein pulverförmiges Phenolharz verwendet. Alternativ zu der verwendeten Aktivkohle können auch pulverförmiger Koks, Ruß oder Graphit oder andere pulverförmige Kohlenstoffe verwendet werden.

Zur Herstellung einer Kanäle-haltigen Struktur aus Kohlenstoff wurde das Aktivkohlepulver mit dem Phenolharzpulver vermischt. Um eine plastische Masse zu erhalten, wurden geringe Mengen einer pulverförmigen Keramik, d.h. Schamotte, hinzugegeben.

Diese Komponenten wurden anschließend mit Celluloseether, Wasser und Plastifizierer in einem Kneter zu einer extrudierfähigen Masse verarbeitet. Diese Masse wurde nachfolgend extrudiert unter Erhalt eines Kanäle-haltigen Monolithen, der mit Hilfe von Mikrowellentechnik getrocknet wurde. Der so getrocknete Grünkörper wurde anschließend auf eine Temperatur von 120°C bis 150°C erhitzt, die zum einen über dem Schmelzpunkt des Phenolharzes lag und zum anderen zu einer schnellen Vernetzung desselben führte. Im Anschluß daran wurde der so gehärtete Grünkörper in einem Ofen unter Schutzgas auf 800°C aufgeheizt. Die Aufheizgeschwindigkeit wurde dabei im Bereich von 350°C bis 600°C auf maximal 5 K/min. beschränkt, um eine Zerstörung der Kanäle-haltigen Struktur bedingt durch die Entweichung gasförmiger Pyrolyseprodukte zu verhindern. Die Endtemperatur von 800°C wurde so lange gehalten, bis alle Pyrolyseprodukte aus dem Ofen abgeführt waren. Anschließend ließ man den Ofen mit Hilfe einer Schnellkühlung über 2 h abkühlen. Der so erhaltene Formkörper wies eine sehr hohe mechanische Stabilität und ein sehr geringes Abkreideverhalten auf. Der pyrolysierte Formkörper konnte ohne Probleme aus dem Ofen entnommen werden.

Durch das Heraustrennen der Extrusionshilfsmittel, wie dem Celluloseether und dem Plastifizierer sowie durch den Abbrand des Phenolharzes um 30 bis 40 Massen-%, bezogen auf den Gehalt des Phenolharzes, wurden Poren in der Struktur erzeugt, die zu einer porösen Gesamtstruktur führten. Die so erzeugten Poren eignen sich besonders gut für die Infiltration mit flüssigem Si. Als Ausgangskohlenstoff hat sich insbesondere Aktivkohle als sehr geeignet erwiesen, da diese eine mikrokristalline Struktur aufweist und sich deswegen besonders gut mit Si in β-SiC umwandeln lässt.

Die zur Extrusion verwendete Masse weisen die in Tabelle 1 angegebene Zusammensetzung auf.

**Tabelle 1**

| **Komponente** | **Gewichtsanteil** |
|---|---|
| Aktivkohle | 19 % |
| Phenolharz | 31,0 % |
| Ton | 3,0 % |
| Wasser | 32,0 % |
| Celluloseether | 4,0 % |
| Gleithilfsmittel | 7,0 % |
| Plastifizierer | 2,0 % |
| Seife | 2,0 % |

Die Aktivkohle war eine Holzaktivkohle mit einer inneren Oberfläche von 2000 m²/g.

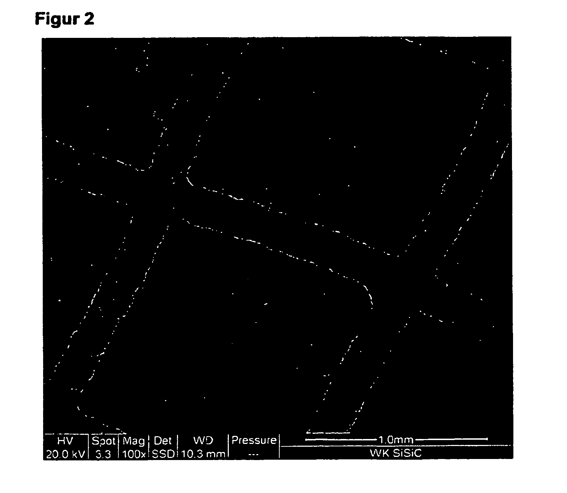

Für die Silizierung wurde der Formkörper mit flüssigem Silizium bei einer Temperatur von 1600 °C (Haltezeit 1 Stunde, Dochtinfiltration) unter Vakuum infiltriert. Nach der Infiltration und Umsetzung wurde eine SiSiC-Keramik mit Kanälen (Wabenkörper) erhalten (vgl. Fig. 1 und 2).

Diese über das erfindungsgemäße Verfahren einfach herzustellenden SiSiC-Keramiken mit Kanälen können z.B. als Katalysatorträgerstrukturen, zum Transport von heißen Gasen, zur Aufheizung von Gasen in Solaranlagen, als Brennhilfsmittel oder als Porenbrennersubstrate verwendet werden.

Nach einer zusätzlichen Behandlung zur Entfernung des nicht umgesetzten Siliziums in den SiSiC-Keramiken können β-SiC-Formkörper mit Kanälen und mit einer porösen Wandstruktur erzeugt werden. Diese Formkörper können auch bei Temperaturen oberhalb des Schmelzpunktes des Si verwendet werden. Insofern eignen sich diese Formkörper, wenn die Kanäle einseitig und wechselseitig verschlossen sind, für Filteranwendungen, wie beispielsweise als Partikelfilter, z.B. als Diesel-Rußfilter. Die Kanäle sind dabei wechselseitig verschlossen, so dass das zu filtrierende Gas durch die Wände der β-SiC-Keramik durchtreten muss und so die Rußpartikel zurückhält.

Figur 3 zeigt Rasterelektronenmikroskopie (REM) Aufnahmen der β-SiC-Keramik nach der Si-Schmelzphasen Silizierung sowie nach einem teilweisen Herauslösen des nichtreagierten Si.

### Beispiel 2: β-SiC-Formkörper mit Kanälen hergestellt über Gasphasensilizierung

Ein Kohlenstoffwabenstruktur wurde, wie in Beispiel 1 beschrieben, hergestellt und unter Inertgas pyrolysiert. Der pyrolysierte Formkörper wurde bei 850°C mit Helium, welches als Trägergas fungierte, und Trichlorsilan (CH₃SiCl₃) und Wasserstoff (H₂) im molaren Verhältnis von 1:8 enthält, durchströmt. Dabei wurde Silizium (Si) und Siliziumcarbid (β-SiC) auf dem porösen Kohlenstoff-Formkörper abgeschieden. Das abgeschiedene Si reagierte in einem weiteren Prozessschritt bei einer Temperatur von 1450°C unter Vakuum (1 mbar) mit dem Kohlenstoff des Formkörpers zu β-SiC. Es entstand eine offenporige Struktur ohne verbleibendes Silizium (Fig. 3). Diese offenporige Struktur eignet sich hervorragend für Filteranwendungen.

### Beispiel 3: SiSiC-Formkörper mit Kanälen, hergestellt über Schlickerinfiltration mit anschließender Schmelzphasensilizierung.

Ein Kohlenstoffwabenstruktur wurde, wie in Beispiel 1 beschrieben, hergestellt. Der Kanäle-haltige Formkörper wurde mittels Tauchinfiltration mit einem Silizium-haltigen Schlicker, welcher aus pulverförmigen Silizium, Dispergier-, Binde- und Lösemittel sowie einem Plastifizierer bestand, beschichtet.

Nach erfolgter Trocknung wurden die organischen Bestandteile wie Dispergier-, Binde- und Lösemittel in Argonatmosphäre ausgebrannt. Durch eine Temperaturerhöhung auf 1500°C schmolz das Silizium und wurde in den porösen Formkörper gesaugt, wo es sich mit dem Kohlenstoff unter Bildung von β-SiC umsetzte.

## Patentansprüche

1. Verfahren zur Herstellung eines porösen β-SiC-haltigen keramischen Formkörpers,
**dadurch gekennzeichnet,**
**dass** das Verfahren die folgenden Schritte umfasst:
(a) Bereitstellen eines porösen Kohlenstoff-haltigen Formkörpers, welcher kein SiC enthält, wobei der Kohlenstoff-haltige Formkörper in eine Kanälehaltige Struktur extrudiert wird, wobei die Kanäle im wesentlichen parallel zueinander angeordnet sind und sich entlang der Längsachse des Formkörpers erstrecken,
(b) Silizieren des porösen Kohlenstoff-haltigen Formkörpers durch Einbringen von Silizium und/oder Silizium-haltigen Substanzen, die 1 bis 35 Gew.-% Aluminium, bezogen auf das Gewicht an Silizium umfassen, in den Kohlenstoff-haltlgen Formkörper und Umsetzen von eingebrachtem Silicium und/oder silizium-haltigen Substanzen mit Kohlenstoff unter Bildung von β-SiC,
wobei nach Schritt (b) die Porosität des erhaltenen SiC-haltigen Formkörpers durch Entfernen von nicht zu SiC umgesetztem Silizium erhöht wird, wobei ein Partikelfilter erhalten wird, der ein durchgehendes, dreldimensionalas β-SiC-Gerüst aufweist, wobei sich durch den Partikelfilter im wesentlichen parallel zueinander angeordnete Kanäle erstrecken, die wechselseitig verschlossen sind, und der Partikelfilter eine mittlere Porengröße im Bereich von 0,1 bis 15 µm aufweist und eine Porosität von 2 bis 80 % aufweist.

2. Verfahren nach Anspruch 1,
**dadurch gekennzeichnet, dass** der Kohlenstoff in dem Kohfenstofmaftigen Formkörper und das Silicium und/oder das Silizium In den Silizum-haltigen Substanzen ein Massenverhältnis von 2,33:1 bis 5:1 von Silizium zu Kohlenstoff aufweisen.

3. Verfahren nach Anspruch 1 oder 2,
**dadurch gekennzeichnet, dass**
die Kanal-haltige Struktur eine Kanaldichte von 50 bis 400 Kanälen/inch² 5 aufweist.

4. Verfahren nach einem der vorhergehenden Ansprüche,
**dadurch gekennzeichnet, dass**
die Kanalwände eine Dicke in einem Bereich von 100 µm bis 450 µm, vorzugsweise in einem Bereich vom 200 bis 380 µm, aufweisen.

5. Verfahren nach einem der vorhergehenden Ansprüche,
**dadurch gekennzeichnet,**
**dass** der Kohlenstoff-haftige Formkörper unter vorzugsweise nichtoxidierenden Bedingungen pyrolysiert wird.

6. Verfahren nach einem der vorhergehenden Ansprüche,
**dadurch gekennzeichnet,**
**dass** der Kohlenstoff-haltige Formkörper wenigstens 20 Gew.-%, vorzugsweise wenigstens 30 Ges.-%, aus Kohlenstoff enthält, wobei sich die Angabe in Gew.-% auf das Gesamtgewicht des Kohfenstoff-haltigen Formkörper bezieht.

7. Verfahren nach einem der vorhergehenden Ansprüche,
**dadurch gekennzeichnet,**
**dass** der Kohlenstoff aus der Gruppe, die aus Aktivkohle. Koks, Kohle, Ruß, Graphit, pyrolysiertem Harz und Mischungen davon besteht, ausgewählt Wird.

8. Verfahren nach einem der vorhergehenden Ansprüche,
**dadurch gekennzeichnet,**
**dass** die Silizierung durch Einbringen von gasförmigen und/oder flüssigen Silizium-haltigen Substanzen und/oder gasförmigem und/oder flüssigem Silizium erfolgt.

9. Verfahren nach einem der vorhergehenden Anspruch,
**dadurch gekennzeichnet,**
**dass** die Silizierung durch Einbringen eines flüssigen und/oder gasförmigen Gemisches aus Silizium und weiteren Metallen erfolgt.

10. Verfahren nach Anspruch 9,
**dadurch gekennzeichnet,**
**dass** die weiteren Metalle Silizidbildner und/oder Carbidbildner sind und vorzugsweise aus der Gruppe, die aus Mo, Fe, Ti, Cr, Nl, Mg, Cu, Co. Mn, Gemischen und Legierungen davon besteht, ausgewählt werden.

11. Verfahren nach einem der vorhergehenden Ansprüche,
**dadurch gekennzeichnet,**
**dass** die Silizierung erfolgt, indem
zunächst pulverförmiges Silizium und/oder pulverförmige Silizium-haltige Substanzen auf den Kohlenstoff-haltigen Formkörper, vorzugsweise in Form eines keramischen Schlickers, aufgebracht wird bzw. werden und nachfolgend das aufgebrachte Silizium und/oder die Silizium-haltigen Substanzen verflüssigt oder geschmolzen wird bzw. werden und in den Kohlenstoff-haltigen Formkörper eindringen.

12. Verfahren nach einem der vorhergehenden Ansprüche,
**dadurch gekennzeichnet,**
**dass** die Silizium-haltigen Substanzen Siliziumorganische Verbindungen sind.

13. Poröser β-SiC-haltiger keramischer Partikelfilter,
**dadurch gekennzeichnet, daß**
der Partikelfilter ein durchgehendes, dreidimensionales β-SiC-Gerüst aufweist, wobei sich durch den Partikelfilter im wesentlichen parallel zueinander angeordnete Kanäle erstrecken, die wechselseitig verschlossen sind, und der Partikelfilter eine mittlere Porengröße im Bereich von 0,1 bis 15 µm aufweist und eine Porosität von 2 bis 80 % aufweist, wobei der Partikelfilter Aluminiumoxid umfasst, welches ein Haftvermittler für in einem nachträglichen Beschichtunasprozess aufgebrachte katalytisch aktive Beschichtungen ist.

14. Poröser β-SiC-haltiger keramischer Partikelfilter nach Anspruch 13,
**dadurch gekennzeichnet dass,**
die Kanäle-haltige Struktur eine Kanaldichte von 50 bis 400 Kanälen/inch² aufweist.

15. Poröser β-SiC-haltiger keramischer Partikelfilter nach Anspruch 13 oder 14,
**dadurch gekennzeichnet, dass**
der poröse β-SiC-haltige keramische Partikelfilter Kanalwände mit einer Dicke in einem Bereich von 100 µm bis 450 µm, vorzugsweise in einem Bereich vom 200 bis 380 µm, aufweist.

16. Poröser β-SiC-haltiger keramischer Partikelfilter nach einem der Ansprüche 13 bis 15,
**dadurch gekennzeichnet,**
**dass** der Kohlenstoff-haftige Formkörper aus dem der Partikelfilter hergestellt ist, vorzugsweise unter Inertgasatmosphäre oder Vakuum, pyrolysiert ist.

17. Poröser β-SiC-haltiger keramischer Partikelfilter nach einem der Ansprüche 13 bis 16,
**dadurch gekennzeichnet,**
**dass** der β-SiC-hatlige Partikelfilter neben SiC auch Phasen aus oder mit Elsensilizid(en), vorzugsweise FeSi₂ und/oder FeSl, Chromsilizid(en), vorzugsweise CrSi₂, und/oder Titansilizid(en), vorzugsweise TiSi₂, Tᵢ₃Si₅ und/oder TiC₂Si₃, und/oder Cobaltsilizid(en), vorzugsweise CoSi₂, CoSi, und/oder Co₂Si, umfasst.

18. Poröser β-SiC-haltiger keramischer Partikelfilter nach einem der Ansprüche 13 bis 17,
**dadurch gekennzeichnet,**
**dass** der β SiC-haltige Partikelfilter faserverstärkt ist.

19. Poröser SiC-haltiger keramischer Partikelfilter nach einem der Ansprüche 13 bis 18,
**dadurch gekennzeichnet,**
**dass** der β-SiC-haltige Partikelfilter mit Kohlenstofffasern und/oder SiC-Kurzfasern faserverstärkt ist.

20. Poröser β SiC-haltiger keramischer Partikelfilter nach einem der Ansprüche 13 bis 19,
**dadurch gekennzeichnet,**
**dass** der β-SiC-haltige Formkörper gerichtete oder lineare Porenstrukturen aufweist.

21. Poröser β-SiC-haltiger keramischer Partikelfilter nach einem der Ansprüche 13 bis 20,
**dadurch gekennzeichnet,**
**dass** der β-SiC-haltige Partikelfilter eine quaderförmige oder zylindrische Formgebung aufweist

22. System,
**dadurch gekennzeichnet,**
**dass** es einen porösen β-SiC-haltigen keramischen Partikelfilter nach einem der Ansprüche 13 bis 21 enthält.

## Claims

1. Process for producing a porous β-SiC-containing shaped ceramic body, **characterized in that** the process comprises the following steps:
(a) provision of a porous carbon-containing shaped body which does not contain any SiC, where the carbon-containing shaped body is extruded to give a channel-containing structure, with the channels being arranged essentially parallel to one another and extending along the longitudinal axis of the shaped body,
(b) silicization of the porous carbon-containing shaped body by introduction of silicon and/or silicon-containing substances comprising from 1 to 35% by weight of aluminium, based on the weight of silicon, into the carbon-containing shaped body and reaction of the silicon and/or silicon-containing substances introduced with carbon to form β-SiC,
where the porosity of the SiC-containing shaped body is increased after step (b) by removal of silicon which has not been converted into SiC to give a particle filter which has a continuous, three-dimensional β-SiC framework, where channels which are arranged essentially parallel to one another and are alternately closed extend through the particle filter and the particle filter has an average pore size in the range from 0.1 to 15 µm and a porosity of from 2 to 80%.

2. Process according to Claim 1, **characterized in that** the carbon in the carbon-containing shaped body and the silicon and/or the silicon in the silicon-containing substances have a mass ratio of silicon to carbon of from 2.33:1 to 5:1.

3. Process according to Claim 1 or 2, **characterized in that** the channel-containing structure has a channel density of from 50 to 400 channels/inch².

4. Process according to any of the preceding claims, **characterized in that** the channel walls have a thickness in the range from 100 µm to 450 µm, preferably in the range from 200 to 380 µm.

5. Process according to any of the preceding claims, **characterized in that** the carbon-containing shaped body is pyrolyzed under preferably nonoxidizing conditions.

6. Process according to any of the preceding claims, **characterized in that** the carbon-containing shaped body contains at least 20% by weight, preferably at least 30% by weight, of carbon, where the indicated value in % by weight is based on the total weight of the carbon-containing shaped body.

7. Process according to any of the preceding claims, **characterized in that** the carbon is selected from the group consisting of activated carbon, coke, coal, carbon black, graphite, pyrolyzed resin and mixtures thereof.

8. Process according to any of the preceding claims, **characterized in that** the silicization is carried out by introduction of gaseous and/or liquid silicon-containing substances and/or gaseous and/or liquid silicon.

9. Process according to any of the preceding claims, **characterized in that** the silicization is carried out by introduction of a liquid and/or gaseous mixture of silicon and further metals.

10. Process according to Claim 9, **characterized in that** the further metals are silicide formers and/or carbide formers and are preferably selected from the group consisting of Mo, Fe, Ti, Cr, Ni, Mg, Cu, Co, Mn, mixtures and alloys thereof.

11. Process according to any of the preceding claims, **characterized in that** the silicization is carried out by firstly applying pulverulent silicon and/or pulverulent silicon-containing substances to the carbon-containing shaped body, preferably in the form of a ceramic slip, and subsequently liquefying or melting the applied silicon and/or the silicon-containing substances and allowing them to penetrate into the carbon-containing shaped body.

12. Process according to any of the preceding claims, **characterized in that** the silicon-containing substances are silicon-organic compounds.

13. Porous β-SiC-containing ceramic particle filter, **characterized in that** the particle filter has a continuous, three-dimensional β-SiC framework, where channels which are arranged essentially parallel to one another and are alternately closed extend through the particle filter and the particle filter has an average pore size in the range from 0.1 to 15 µm and a porosity of from 2 to 80%, where the particle filter comprises aluminium oxide which is a bonding agent for catalytically active coatings applied in a subsequent coating process.

14. Porous β-SiC-containing ceramic particle filter according to Claim 13, **characterized in that** the channel-containing structure has a channel density of from 50 to 400 channels/inch².

15. Porous β-SiC-containing ceramic particle filter according to Claim 13 or 14, **characterized in that** the porous β-SiC-containing ceramic particle filter has channel walls having a thickness in the range from 100 µm to 450 µm, preferably in the range from 200 to 380 µm.

16. Porous β-SiC-containing ceramic particle filter according to any of Claims 13 to 15, **characterized in that** the carbon-containing shaped body from which the particle filter has been produced has preferably been pyrolyzed under an inert gas atmosphere or under reduced pressure.

17. Porous β-SiC-containing ceramic particle filter according to any of Claims 13 to 16, **characterized in that** the β-SiC-containing particle filter comprises phases of or comprising iron silicide(s), preferably FeSi₂ and/or FeSi, chromium silicide(s), preferably CrSi₂, and/or titanium silicide(s), preferably TiSi₂, Ti₃Si₅ and/or TiC₂Si₃, and/or cobalt silicide(s), preferably CoSi₂, CoSi, and/or Co₂Si, in addition to SiC.

18. Porous β-SiC-containing ceramic particle filter according to any of Claims 13 to 17, **characterized in that** the β-SiC-containing particle filter is fibre-reinforced.

19. Porous SiC-containing ceramic particle filter according to any of Claims 13 to 18, **characterized in that** the β-SiC-containing particle filter is fibre-reinforced with carbon fibres and/or short SiC fibres.

20. Porous β-SiC-containing ceramic particle filter according to any of Claims 13 to 19, **characterized in that** the β-SiC-containing shaped body has directional or linear pore structure.

21. Porous β-SiC-containing ceramic particle filter according to any of Claims 13 to 20, **characterized in that** the β-SiC-containing particle filter has a cuboidal or cylindrical shape.

22. System, **characterized in that** it contains a porous β-SiC-containing ceramic particle filter according to any of Claims 13 to 21.

## Revendications

1. Procédé de fabrication d'un corps moulé poreux en céramique contenant du SiC β,
**caractérisé en ce que**
le procédé comprend les étapes suivantes :
(a) mise à disposition d'un corps moulé poreux contenant du carbone, lequel ne contient pas de SiC, le moulé poreux contenant du carbone étant extrudé en une structure contenant des canaux, les canaux étant disposés sensiblement parallèlement les uns aux autres et s'étendant le long de l'axe longitudinal du corps moulé,
(b) siliciuration du corps moulé poreux contenant du carbone par introduction de silicium et/ou de substances contenant du silicium, qui comprennent de 1 à 35 % en poids d'aluminium, rapportés au poids du silicium, dans le corps moulé poreux contenant du carbone et mise en réaction du silicium ou des substances contenant du silicium introduits moyennant formation de SiC β,
sachant qu'après l'étape (b), la porosité du corps moulé poreux obtenu contenant du SiC est augmentée après l'élimination du silicium non converti en SiC, lors de quoi est obtenu un filtre à particules qui comporte un squelette continu tridimensionnel de SiC β, des canaux qui sont fermés les uns par rapport aux autres, disposés sensiblement parallèlement les uns aux autres s'étendant à travers le filtre à particules, et le filtre à particules présentant une taille moyenne des pores dans l'intervalle de 0,1 à 15 µm et une porosité de 2 à 80%.

2. Procédé selon la revendication 1,
**caractérisé en ce que** le carbone dans le corps moulé contenant du carbone et le silicium et/ou le silicium dans les substances contenant du silicium présentent un rapport massique du silicium au carbone de 2,33 : 1 à 5 : 1.

3. Procédé selon la revendication 1 ou 2,
**caractérisé en ce que**
la structure contenant des canaux présente une densité de canaux de 50 à 400 canaux par pouce carré.

4. Procédé selon l'une quelconque des revendications précédentes,
**caractérisé en ce que**
les parois des canaux présentent une épaisseur dans un intervalle de 100 µm à 450 µm, de préférence dans un intervalle de 200 à 380 µm.

5. Procédé selon l'une quelconque des revendications précédentes,
**caractérisé en ce que**
le corps moulé contenant du carbone est pyrolysé sous des conditions de préférence non oxydantes.

6. Procédé selon l'une quelconque des revendications précédentes,
**caractérisé en ce que**
le corps moulé contenant du carbone contient au moins 20% en poids, de préférence au moins 30% en poids de carbone, la donnée de % en poids se rapportant au poids total du corps moulé contenant du carbone.

7. Procédé selon l'une quelconque des revendications précédentes,
**caractérisé en ce que**
le carbone est choisi parmi le groupe consistant en le charbon actif, le coke, le charbon, le noir de fumée, le graphite, la résine pyrolysée et des mélanges de ces derniers.

8. Procédé selon l'une quelconque des revendications précédentes,
**caractérisé en ce que**
la siliciuration s'effectue par introduction de substances gazeuses et/ou liquides contenant du silicium et/ou de silicium gazeux et/ou liquide.

9. Procédé selon l'une quelconque des revendications précédentes,
**caractérisé en ce que**
la siliciuration s'effectue par introduction d'un mélange liquide et/ou gazeux de silicium et d'autres métaux.

10. Procédé selon la revendication 9,
**caractérisé en ce que**
les autres métaux sont des éléments susceptibles de donner des siliciures et/ou des éléments susceptibles de donner des carbures et sont choisis de préférence parmi le groupe constitué de Mo, Fe, Ti, Ni. Mg, Cu, Co, Mn, de mélanges et d'alliages de ceux-ci.

11. Procédé selon l'une quelconque des revendications précédentes,
**caractérisé en ce que**
la siliciuration s'effectue **en ce que**
d'abord du silicium pulvérulent et/ou des substances pulvérulentes contenant du silicium sont appliqués sur le corps moulé contenant du carbone, de préférence sous la forme d'une barbotine de céramique, et **en ce qu'**ensuite le silicium et/ou les substances contenant du silicium appliqués son liquéfiés ou fondus et pénètrent dans le corps moulé contenant du carbone.

12. Procédé selon l'une quelconque des revendications précédentes,
**caractérisé en ce que**
les substances contenant du silicium sont des composés organosiliciques.

13. Filtre à particules céramique poreux contenant du SiC β,
**caractérisé en ce que**
le filtre à particules présente un squelette continu tridimensionnel en SiC β, des canaux qui sont fermés les uns par rapport aux autres, disposés sensiblement parallèlement les uns aux autres, s'étendant à travers le filtre à particules, et **en ce que** le filtre à particules présente une taille moyenne des pores dans l'intervalle de 0,1 à 15 µm et une porosité de 2 à 80 %, le filtre à particules comprenant de l'oxyde d'aluminium, lequel est un agent de pontage pour des revêtements catalytiquement actifs appliqués dans un processus ultérieur d'enduction.

14. Filtre à particules céramique poreux contenant du SiC β selon la revendication 13,
**caractérisé en ce que**
la structure contenant des canaux présente une densité de canaux de 50 à 400 canaux par pouce carré.

15. Filtre à particules céramique poreux contenant du SiC β selon la revendication 13 ou 14,
**caractérisé en ce que**
le filtre à particules céramique poreux contenant du SiC β comporte des parois de canaux d'une épaisseur dans un intervalle de 100 µm à 450 µm, de préférence dans un intervalle de 200 à 380 µm.

16. Filtre à particules céramique poreux contenant du SiC ß selon l'une quelconque des revendications 13 à 15,
**caractérisé en ce que**
le corps moulé contenant du carbone en lequel est fabriqué le filtre à particules est pyrolysé de préférence sous une atmosphère de gaz inerte ou dans le vide.

17. Filtre à particules céramique poreux contenant du SiC ß selon l'une quelconque des revendications 13 à 16,
**caractérisé en ce que**
le filtre à particules céramique poreux contenant du SiC ß comprend aussi à côté du SiC des phases en ou avec du ou des siliciures de fer, de préférence FeSi₂ et/ou FeSi, du ou des siliciures de chrome, de préférence CrSi₂ et/ou du ou des siliciures de titane, de préférence TiSi₂, Ti3Si₅ et/ou TiC₂Si₃ et/ou du ou des siliciures de cobalt, de préférence CoSi₂, CoSi et/ou Co₂Si.

18. Filtre à particules céramique poreux contenant du SiC ß selon l'une quelconque des revendications 13 à 17,
**caractérisé en ce que**
le filtre à particules contenant du SiC ß est renforcé par des fibres.

19. Filtre à particules céramique poreux contenant du SiC ß selon l'une quelconque des revendications 13 à 18,
**caractérisé en ce que**
le filtre à particules contenant du SiC ß est renforcé par des fibres, fibres de carbone et/ou fibres courtes de SiC.

20. Filtre à particules céramique poreux contenant du SiC ß selon l'une quelconque des revendications 13 à 19,
**caractérisé en ce que**
le corps moulé contenant du SiC ß comporte des structures de pores orientées ou linéaires.

21. Filtre à particules céramique poreux contenant du SiC ß selon l'une quelconque des revendications 13 à 20,
**caractérisé en ce que**
le filtre à particules contenant du SiC ß présente une forme parallélépipédique ou cylindrique,

22. Système
**caractérisé en ce que**
il contient un filtre à particules céramique poreux contenant du SiC ß selon l'une quelconque des revendications 13 à 21.
